(19) Europäisches Patentamt
European Patent Office
Office européen des brevets

(11) EP 4 379 421 A1

(12) **EUROPEAN PATENT APPLICATION**
published in accordance with Art. 153(4) EPC

(43) Date of publication:
**05.06.2024 Bulletin 2024/23**

(21) Application number: **21953175.3**

(22) Date of filing: **13.08.2021**

(51) International Patent Classification (IPC):
***G01S 17/08*** *(2006.01)* ***G01S 7/48*** *(2006.01)*

(52) Cooperative Patent Classification (CPC):
**G01S 7/48; G01S 17/08**

(86) International application number:
**PCT/CN2021/112523**

(87) International publication number:
**WO 2023/015562 (16.02.2023 Gazette 2023/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
- **WANG, Shuai**
  **Shenzhen, Guangdong 518129 (CN)**
- **GUO, Qi**
  **Shenzhen, Guangdong 518129 (CN)**
- **AN, Kai**
  **Shenzhen, Guangdong 518129 (CN)**
- **YU, Anliang**
  **Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

# (54) LIDAR AND TERMINAL DEVICE

(57) A lidar and a terminal device are provided, to resolve a problem in the conventional technology that a dynamic range of a lidar is low. The lidar and the terminal are applied to fields such as self-driving, intelligent driving, assisted driving, or networked vehicles. The lidar includes a transmitting module, a receiving optical module, and a detection module. The transmitting module is configured to transmit signal light. The receiving optical module is configured to: receive an echo signal obtained by reflecting signal light by a target in a detection region, widen a light spot corresponding to the echo signal in a horizontal direction or a vertical direction, and project a widened light spot onto the detection module. The detection module is configured to perform optical-to-electrical conversion on the received light spot, to obtain an electrical signal used to determine association information of the target. The light spot corresponding to the echo signal is widened by the receiving optical module in the horizontal direction or the vertical direction. In this way, the light spot in the widening direction may cover a large area of a light sensitive region in the detection module. Therefore, a dynamic range of the lidar can be increased, and a distance measurement capability of the lidar under strong stray light can be improved.

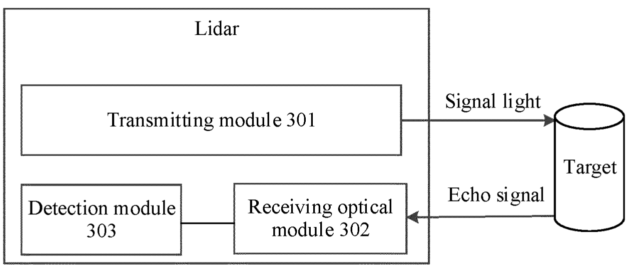


FIG. 3

EP 4 379 421 A1

# Description

## TECHNICAL FIELD

This application relates to the field of laser detection technologies, and in particular, to a lidar and a terminal device.

## BACKGROUND

With development of science and technology, intelligent terminals such as intelligent transportation devices, smart home devices, robots, and vehicles are gradually entering people's daily life. A lidar plays an increasingly important role in the intelligent terminal. A lidar installed in the intelligent terminal can sense a surrounding environment, collect data, recognize and track a moving object, recognize, for example, a lane line and a sign in a static scenario, and plan a route based on a navigator and map data. The lidar transmits signal light, and may receive an echo signal obtained by reflecting the signal light by a target, to determine distance information and the like of the target based on the echo signal. However, the echo signal is affected by transmit power, a reflectivity of the target, atmospheric condition, and a distance between the target and the lidar. Therefore, the lidar can receive only a weak echo signal. Therefore, the lidar usually uses a single-photon detector with high sensitivity (that is, the single photon detector can detect and count a single photon), for example, a single-photon avalanche diode (single-photon avalanche diode, SPAD).

Usually, the single-photon detector includes a light sensitive cell (cell) array. When a quantity of photons transmitted to a light sensitive cell reaches a specific value, the light sensitive cell is in a saturation state. That is, for a light sensitive cell that is already in the saturation state, even if more photons are transmitted to the light sensitive cell, a signal output by the light sensitive cell does not increase. Based on this, a dynamic range of the lidar is limited.

In conclusion, how to effectively improve the dynamic range of the lidar is a technical problem that urgently needs to be resolved currently.

## SUMMARY

This application provides a lidar and a terminal device, to increase a dynamic range of the lidar as much as possible.

According to a first aspect, this application provides a lidar including a transmitting module, a receiving optical module, and a detection module, where the transmitting module is configured to transmit signal light; the receiving optical module is configured to: receive an echo signal obtained by reflecting the signal light by a target in a detection region, widen a light spot corresponding to the echo signal in a horizontal direction or a vertical direction, and project a widened light spot onto the detection module; and the detection module is configured to perform optical-to-electrical conversion on the received widened light spot, to obtain an electrical signal used to determine association information of the target.

That the light spot corresponding to the echo signal propagated by the receiving optical module is widened in the horizontal direction or the vertical direction may alternatively be understood as that the light spot corresponding to the echo signal propagated by the receiving optical module is diffused in the horizontal direction or diffused in the vertical direction. In other words, a size, in the horizontal direction or the vertical direction, of the light spot corresponding to the echo signal propagated by the receiving optical module is greater than a size threshold, and the size threshold may be obtained based on a size of a light spot corresponding to the echo signal propagated by the receiving optical module when the echo signal is focused.

Based on the solution, after the echo signal from the detection region passes through the receiving optical module, the light spot corresponding to the echo signal is widened in the horizontal direction or the vertical direction, and the light spot in the widening direction may cover a large area of a light sensitive region of the detection module. Therefore, a quantity of photons received in the light sensitive region of a unit area of the detection module is reduced, thereby improving an anti-saturation capability of the detection module, and further improving a dynamic range of the lidar. Further, when the lidar is applied to a scenario with strong background stray light, because the dynamic range of the lidar is high, it is difficult for the strong background stray light to cause saturation of the detection module (that is, a threshold for the lidar to receive the stray light is increased), thereby helping improve a capability of the lidar to resist background stray light, and further improving a distance measurement capability of the lidar under the strong background stray light.

In a possible implementation, the receiving optical module includes a non-equal-proportion imaging optical component. Further, optionally, the non-equal-proportion imaging optical component is configured to separate a horizontal focal plane corresponding to the echo signal in the horizontal direction from a vertical focal plane corresponding to the echo signal in the vertical direction.

If the detection module is located on the horizontal focal plane, the light spot that corresponds to the echo signal and that is received by the detection module is widened in the horizontal direction (that is, the light spot is diffused in the horizontal direction), and is focused in the vertical direction. If the detection module is located on the vertical focal plane, the light spot that corresponds to the echo signal and that is received by the detection module is widened in the vertical direction (that is, the light spot is diffused in the vertical direction), and is focused in the horizontal direction. In this way, the horizontal focal plane and the vertical focal plane of the echo signal are separated by using the non-equal-proportion imaging optical component, so that the light spot corresponding to the echo signal is widened (that is, diffused) in the horizontal direction or the vertical direction.

For example, the non-equal-proportion imaging optical component is a focal power element, and an equivalent focal power of the focal power element in the horizontal direction is different from an equivalent focal power of the focal power element in the vertical direction. Further, the focal power element includes a one-dimensional focal power element or a two-dimensional focal power element. The one-dimensional focal power element includes at least one or a combination of a one-dimensional cylindrical mirror, a one-dimensional grating, or a one-dimensional wedge; and the two-dimensional focal length element includes at least one or a combination of a torus mirror, a two-dimensional cylindrical mirror, a saddle mirror, a two-dimensional grating, or a two-dimensional wedge.

In a possible implementation, the signal light is a linear light beam.

The transmitting module transmits the signal light of the linear light beam, so that the lidar can implement a line scanning mode. When the lidar uses the line scanning mode, a large distance measurement range can be implemented, and an optical design is simple.

In a possible implementation, the transmitting module includes a light source array, and the light source array may gate a light source in a time division manner by row or by column; and a light source row gated by row or a light source column gated by column is used to transmit the signal light of the linear light beam.

The light source in the light source array is gated in the time division manner by row or by column, so that the transmitting module can transmit the signal light of the linear light beam, and the lidar can implement the line scanning mode.

In a possible implementation, the transmitting module includes a first laser and a first light beam adjustment component; the first laser is configured to transmit first signal light; and the first light beam adjustment component is configured to adjust the first signal light to the signal light of the linear light beam.

The first light beam adjustment component may adjust, to the linear light beam, the first signal light transmitted by the first laser, so that the lidar can implement the line scanning mode.

In a possible implementation, the lidar further includes a scanning module, and the scanning module is configured to reflect the signal light from the transmitting module to the detection region, where the signal light is of the linear light beam.

By using the scanning module, the linear light beam transmitted by the transmitting module may be reflected to the detection region at different scanning angles, so that the detection region is scanned, thereby implementing detection of the detection region.

For example, the scanning module includes at least one of a rotating mirror, an oscillating mirror, and a micro electro-mechanical system (micro electro-mechanical system, MEMS) mirror.

In a possible implementation, the detection module includes a pixel array; and a pixel is gated in a time division manner by row or by column in the pixel array.

A pixel in the pixel array is gated in the time division manner by row or by column, so that the detection module can implement line receiving. Generally, when the light source is gated in the time division manner by row in the light source array, correspondingly, the pixel array also gates the pixel in the time division manner by row; and when the light source is gated in the time division manner by column in the light source array, correspondingly, the pixel array also gates the pixel in the time division manner by column. The signal light of the linear light beam is transmitted based on the light source array, and the echo signal is received by the pixel array in the time division manner by row or by column, so that the lidar can implement a line-scanning line-receiving mode.

In a possible implementation, the signal light is a surface light beam.

The transmitting module transmits the signal light of the surface light beam, so that the lidar can implement surface light emitting on the detection region. When the lidar uses a surface light emitting mode, scanning efficiency is high.

In a possible implementation, the transmitting module includes a light source array, and a light source is gated by surface in the light source array; and the light source gated by surface is used to transmit the signal light of the surface light beam. Gating the light source in the light source array by surface means that at least one row and at least one column of light sources in the light source array are gated at one time.

The light source in the light source array is gated by surface, so that the transmitting module can transmit the signal light of the surface light beam, and the lidar can implement surface light emitting on the detection region.

In a possible implementation, the transmitting module includes a second laser and a second light beam adjustment component; the second laser is configured to transmit second signal light; and the second light beam adjustment component is configured to adjust the second signal light to the signal light of the surface light beam.

The second light beam adjustment component may adjust, to the surface light beam, the second signal light transmitted by the second laser, so that the lidar can implement a surface light emitting mode.

In a possible implementation, the detection module includes a pixel array; and a pixel is gated by surface in the pixel array. Gating the pixel by surface in the pixel array means that at least one row and at least one column of pixels in the pixel array are gated at one time.

The pixel in the pixel array is gated by surface, so that the lidar can implement a surface receiving mode.

Further, based on the signal light of the surface light beam transmitted by the transmitting module, the lidar can implement surface-emitting surface-receiving.

In a possible implementation, a pixel in the pixel array includes at least two binned light sensitive cells.

The at least two light sensitive cells are binned into one pixel, and echo signals (that is, photons) sensed by light sensitive cells in the at least two binned light sensitive cells are superimposed and read in a manner of one pixel. This helps reduce a quantity of photons sensed by a single light sensitive cell, so that the lidar has a capability of implementing a high dynamic range.

In a possible implementation, the lidar further includes a processing control module, and the processing control module is configured to: receive the electrical signal from the detection module, and determine the association information of the target based on the electrical signal.

According to a second aspect, this application provides a terminal device, where the terminal device may include the lidar included in the first aspect or any one of the possible implementations in the first aspect.

Further, optionally, the terminal device may further include a processing control module. The processing control module is configured to receive an electrical signal from a detection module, and determine association information of a target based on the electrical signal, and further, the processing control module may further perform route planning and the like based on the association information of the target.

For technical effects that can be achieved in any aspect in the second aspect, refer to the foregoing descriptions of the beneficial effects in the first aspect. Details are not described herein again.

## BRIEF DESCRIPTION OF DRAWINGS

FIG. 1a is a schematic diagram of a principle of equal-proportion imaging according to this application;

FIG. 1b is a schematic diagram of a principle of non-equal-proportion imaging according to this application;

FIG. 1c is a schematic diagram of a structure of a detection module according to this application;

FIG. 1d is a schematic diagram of a position relationship of a meridian plane and a sagittal plane according to this application;

FIG. 2 is a schematic diagram of an application scenario according to this application;

FIG. 3 is a schematic diagram of an architecture of a lidar according to this application;

FIG. 4a is a schematic diagram of a structure of a light source array according to this application;

FIG. 4b is a schematic diagram of a structure of another light source array according to this application;

FIG. 4c is a schematic diagram of a structure of still another light source array according to this application;

FIG. 5 is a schematic diagram of a structure of a transmitting optical module according to this application;

FIG. 6a is a schematic diagram of a structure of a transmitting module according to this application;

FIG. 6b is a schematic diagram of a structure of a transmitting module according to this application;

FIG. 7 is a schematic diagram of a structure of a lens group according to this application;

FIG. 8 is an example schematic diagram of a position relationship between a non-equal-proportion imaging optical component and a lens group according to this application;

FIG. 9a is a schematic diagram of a coverage range that is in a pixel array and that is of a light spot corresponding to an echo signal that has passed through a first light stop and a non-equal-proportion imaging optical component according to this application;

FIG. 9b is a schematic diagram of a coverage range that is in a pixel array and that is of a light spot corresponding to an echo signal that has passed through a non-equal-proportion imaging optical component according to this application;

FIG. 9c is a schematic diagram of another coverage range that is in a pixel array and that is of a light spot corresponding to an echo signal that has passed through a first light stop and a non-equal-proportion imaging optical component according to this application;

FIG. 9d is a schematic diagram of another coverage range that is in a pixel array and that is of a light spot corresponding to an echo signal that has passed through a non-equal-proportion imaging optical component according to this application;

FIG. 10 is a schematic diagram of an architecture of a lidar according to this application;

FIG. 11 is a schematic diagram of a size of a light spot corresponding to an echo signal according to this application;

FIG. 12 is a three-dimensional diagram of a simulated light spot corresponding to an echo signal according to this application;

FIG. 13 is a schematic diagram of a simulation result of an echo signal in some rows of a pixel array according to this application;

FIG. 14a is a schematic diagram of an architecture of another lidar according to this application;

FIG. 14b is a schematic diagram of an architecture of another lidar according to this application;

FIG. 15 is a schematic diagram of a position of a lidar system in a vehicle according to this application; and

FIG. 16 is a schematic diagram of a structure of a terminal device according to this application.

## DESCRIPTION OF EMBODIMENTS

The following describes in detail embodiments of this application with reference to accompanying drawings.

The following describes some terms in this application. It should be noted that these explanations are intended for ease of understanding by a person skilled in the art, but do not constitute a limitation on the protection scope claimed in this application.

1. Equal-proportion imaging

Equal-proportion imaging means that, when object space is mapped to image space, the object space is scaled down or scaled up in a horizontal direction and a vertical direction in an equal proportion. It may alternatively be understood as that the object space is scaled down or scaled up in the horizontal direction and the vertical direction in an equal proportion to be the image space. Refer to FIG. 1a. The object space may be mapped to the image space by using an equal-proportion imaging optical component, and the equal-proportion imaging optical component may scale down the object space in the horizontal direction and the vertical direction in an equal proportion to obtain the image space.

2. Non-equal-proportion imaging

Non-equal-proportion imaging means that, when object space is mapped to image space, scaling-up proportions in a horizontal direction and a vertical direction are different, or scaling-down proportions in a horizontal direction and a vertical direction are different. In other words, the object space is scaled up in the horizontal direction and the vertical direction in a non-equal proportion to be the image space; or the imaging space of the object space is scaled down in the horizontal direction and the vertical direction in a non-equal proportion to be the image space. Refer to FIG. 1b. For example, a scaling-up proportion in the horizontal direction is greater than a scaling-up proportion in the vertical direction when the object space is mapped to the image space.

3. Binning (referred to as binning)

Binning is an image reading manner. In this manner, signals (for example, photons) sensed by all light sensitive cells in binned light sensitive cells (or referred to as a cell) (cell) are added together and read in a manner of one pixel (Pixel). Binning may be generally classified into horizontal (or referred to as traverse) binning and vertical (or referred to as longitudinal) binning. Horizontal binning is to superimpose signals of adjacent rows together and read the signals in a manner of one pixel (refer to FIG. 1c below), and vertical binning is to superimpose signals of adjacent columns together and read the signals in a manner of one pixel. It should be understood that a binning manner may alternatively be another possible manner, for example, binning in a diagonal direction. This is not limited in this application.

4. Dynamic range

The dynamic range is an important parameter of a lidar. For the lidar, the dynamic range usually refers to a range including values of a minimum signal and a maximum signal that can be recognized. When the minimum signal that can be recognized is fixed, a larger dynamic range indicates a larger value of the maximum signal that can be recognized.

FIG. 1c is a schematic diagram of a structure of a detection module according to this application. For example, the detection module includes 6×6 light sensitive cells (cells). In this example, each cell is saturated after sensing one photon. When the cells are not binned, one cell is one pixel (Pixel). When one photon is transmitted to one pixel, the pixel may output a signal 1. When two or more photons are simultaneously transmitted to one pixel, the pixel still outputs the signal 1.

For example, 1×3 cells are binned into one pixel, that is, one pixel includes 1×3 cells. When one photon is transmitted to the pixel, the pixel may output a signal 1. When two photons are simultaneously transmitted to the pixel, and the two photons are not simultaneously transmitted to a same cell, the pixel outputs a signal 2. When three or more photons are simultaneously transmitted to the pixel, the pixel outputs a signal 3. A dynamic range of a lidar based on 1×3 cells binned into one pixel may be tripled compared with a dynamic range of a lidar in which cells are not binned.

5. Light spot

The light spot is usually spatial energy distribution formed on a cross section (for example, a light sensitive surface of a detection module in this application) of a light beam. A shape of the light spot may be a rectangle, an ellipse, a circle, or another regular or irregular pattern. In this application, a light spot corresponding to an echo signal is spatial energy distribution formed by the echo signal on the light sensitive surface of the detection module. It should be noted that, a person skilled in the art can know that, in essence, the light spot has energy distribution of different intensity as a whole. A core region has a high energy density, and a shape of the light spot in the core region is obvious, while an edge part gradually extends outwards, so that an energy density of the edge part is low, and a shape of the light spot in the edge part is unclear. In addition, as energy intensity gradually decreases, a recognition degree of a light spot part close to the edge is low. Therefore, a light spot having a specific shape in this application may be understood as a light spot that has an easily recognized boundary and that is formed by a part having strong energy and a high energy density, and is not a whole light spot in a technical sense.

It should be understood that a boundary of a light spot is usually defined by using $1/e^2$ of a maximum energy density.

6. Vertical focal plane and horizontal focal plane

Refer to FIG. 1d. A meridian plane and a sagittal plane in this application are defined. The meridian plane (or referred to as a vertical plane) in optics refers to a plane formed by a primary light beam of an object point outside an axis and a principal axis of an optical system, and is referred to as a meridian plane of imaging of the optical system. A light beam located on the meridian plane is referred to as a meridian light beam (or referred to as a vertical light beam), and a position at which the meridian light beam is focused is referred to as a meridian image plane (or referred to as a vertical focal plane or a vertical image plane). It may alternatively be understood as that an image formed by the meridian light beam is referred to as a meridian image point, and an image plane in which the meridian image point is located is referred to as the meridian image plane.

The sagittal plane (or referred to as a horizontal plane) is perpendicular to the meridian plane. A light beam located on the sagittal plane is referred to as a sagittal light beam (or referred to as a horizontal light beam), and a position at which the sagittal light beam is focused is referred to as a sagittal image plane (or referred to as a horizontal focal plane or a horizontal image plane). It may alternatively be understood as that an image formed by the sagittal light beam is referred to as a sagittal image point, and an image plane in which the sagittal image point is located is referred to as the sagittal image plane.

A direction corresponding to the meridian plane is referred to as a meridian direction (or referred to as a vertical direction), and a direction corresponding to the sagittal plane is referred to as a sagittal direction (or referred to as a horizontal direction).

It should be noted that, in FIG. 1d, for example, an included angle between the meridian plane and the sagittal plane is equal to 90. The included angle between the meridian plane and the sagittal plane may alternatively be less than 90 degrees or greater than 90 degrees, and an engineering error within a specific range is allowed.

7. Gated pixel

In a pixel array, a row address may be a horizontal coordinate, and a column address may be a vertical coordinate. In this application, an example in which a row of the pixel array corresponds to a horizontal direction and a column of the pixel array corresponds to a vertical direction is used for description. Data at a specified position in a memory may be extracted by gating a signal by using a row and a column, and a pixel corresponding to the extracted specified position is a gated pixel. It should be understood that a pixel in the pixel array may store a detected signal in a corresponding memory.

Based on the foregoing content, the following shows some possible application scenarios of this application as an example.

FIG. 2 is an example schematic diagram of a possible application scenario of this application. In this application scenario, for example, a receiving optical module is used in a lidar, the lidar is installed in a vehicle, and the vehicle travels on a road. The vehicle may be, for example, a driverless vehicle, a smart vehicle, an electric vehicle, or a digital vehicle. The lidar may be deployed at various positions of the vehicle. For example, the lidar may be deployed in any one or more directions of four directions: front, rear, left, and right of the vehicle, to capture information about an environment around the vehicle. In FIG. 2, for example, the lidar is deployed in the front of the vehicle. The lidar may sense a sector region shown in a dashed-line box in FIG. 2, and the sector region may be referred to as a detection region of the lidar.

In a possible implementation, the lidar may obtain latitude and longitude, a speed, and an orientation of a vehicle, or association information (for example, a distance of a target, a moving speed of the target, a posture of the target, or a grayscale image of the target) of the target (for example, another surrounding vehicle) in a specific range in real time or periodically. The lidar or the vehicle may determine a position and/or path planning of the vehicle based on the association information. For example, the position of the vehicle is determined by using the longitude and the latitude. Alternatively, a traveling direction and a destination of the vehicle in a future period of time are determined by using the speed and the orientation. Alternatively, a quantity of obstacles around the vehicle, a density of the obstacles, and the like are determined by using a distance to a surrounding object. Further, optionally, assisted driving, self-driving, or the like of the vehicle may be implemented by combining a function of an advanced driving assistance system (advanced driving assistant system, ADAS). It should be understood that a principle of detecting the association information of the target by the lidar is as follows: The lidar transmits signal light in a specific direction. If a target exists in the detection region of the lidar, the target may reflect the received signal light back to the lidar (the reflected signal light may be referred to as an echo signal), and then the lidar determines association information of the target based on the echo signal.

It should be noted that the foregoing application scenario is merely an example. The lidar (the lidar includes the receiving optical module provided in this application) provided in this application may be further applied to a plurality of other possible scenarios, and is not limited to the scenario shown in the foregoing example. For example, the lidar may alternatively be installed in an uncrewed aerial vehicle as an airborne radar. For another example, the lidar may alternatively be installed in a road side unit (road side unit, RSU) as a roadside traffic lidar, to implement intelligent vehicle-road cooperative communication. For another example, the lidar may be installed in an automated guided vehicle (automated guided vehicle, AGV), where the AGV refers to a transport vehicle equipped with an automatic navigation apparatus, for example, an electromagnetic automatic navigation apparatus or an optical automatic navigation apparatus, capable of travelling along a specified navigation path, and having security protection and various load-moving functions. The details are not listed one by one herein. In addition, the application scenario described in this application is intended to describe the technical solutions in this application more clearly, but does not constitute a limitation on the technical solutions provided in this application. A person of ordinary skill in the art may learn that, as new application scenarios emerge, the technical solutions provided in this application are also applicable to similar technical problems.

Based on the foregoing content, the application scenario may be applied to fields such as driverless driving, automatic driving, assisted driving, intelligent driving, a networked vehicle, security monitoring, remote interaction, mapping, or artificial intelligence.

Based on the foregoing content, the following specifically describes the lidar provided in this application with reference to FIG. 3 to FIG. 14b.

FIG. 3 is a schematic diagram of an architecture of a lidar according to this application. The lidar may include a transmitting module 301, a receiving optical module 302, and a detection module 303. The transmitting module 301 is configured to transmit signal light. The receiving optical module 302 is configured to: receive an echo signal obtained by reflecting the signal light by a target in a detection region, widen a light spot corresponding to the echo signal in a horizontal direction or a vertical direction, and project a widened light spot onto the detection module 303. It may alternatively be understood as that, after the echo signal from the detection region is propagated by the receiving optical module 302, the light spot corresponding to the echo signal is widened in the horizontal direction or the vertical direction. Alternatively, it may be understood that the echo signal from the detection region is imaged in a non-equal proportion in the horizontal direction and the vertical direction after passing through the receiving optical module 302. The detection module 303 is configured to perform optical-to-electrical conversion on the received widened light spot, to obtain an electrical signal used to determine association information of the target. The echo signal may alternatively be understood as including reflected light obtained by reflecting, by the target in the detection region, the signal light transmitted to the detection region.

It should be understood that the receiving optical module 302 and the detection module 303 may alternatively be collectively referred to as a receiving module.

Based on the foregoing lidar, after the echo signal from the detection region passes through the receiving optical module, the light spot corresponding to the echo signal is widened in the horizontal direction or the vertical direction, and the light spot in the widening direction may cover a large area of a light sensitive region of the detection module. Therefore, a quantity of photons received in the light sensitive region of a unit area is reduced, thereby improving an anti-saturation capability of the detection module, and further improving a dynamic range of the lidar. In addition, when the light spot corresponding to the echo signal is widened in the horizontal direction and is not changed in the vertical direction, the dynamic range of the lidar may be improved without reducing a spatial resolution of the lidar in the vertical direction. When the light spot corresponding to the echo signal is widened in the vertical direction and is not changed in the horizontal direction, the dynamic range of the lidar may be improved without reducing a spatial resolution of the lidar in the horizontal direction. Further, when the lidar is applied to a scenario with strong background stray light, because the dynamic range of the lidar is high, it is difficult for the strong background stray light to cause saturation of the detection module (that is, a threshold for the lidar to receive the stray light is increased), thereby helping improve a capability of the lidar to resist background stray light, and further improving a distance measurement capability of the lidar under the strong background stray light.

For example, that the light spot corresponding to the echo signal is widened in the horizontal direction or the vertical direction includes but is not limited to: The light spot corresponding to the echo signal is widened in the horizontal direction and is not changed in the vertical direction, or the light spot corresponding to the echo signal is widened in the vertical direction and is not changed in the horizontal direction, or the light spot corresponding to the echo signal is reduced in the horizontal direction and is widened in the vertical direction, or the light spot corresponding to the echo signal is widened in the horizontal direction and is reduced in the vertical direction. In other words, at a same position, the light spot corresponding to the echo signal has different sizes in the horizontal direction and the vertical direction. The size of the light spot corresponding to the echo signal is a size of a shape formed by the echo signal on a cross section.

In a possible implementation, the association information of the target includes but is not limited to distance information of the target, a position of the target, a speed of the target, and/or grayscale information of the target.

It should be noted that, if the detection module is placed horizontally level and vertically upright, the horizontal direction in this application is parallel to a horizontal direction in the world coordinate system, and the vertical direction is parallel to a vertical direction in the world coordinate system. If the detection module is disposed in an inclined manner, there is a specific included angle between the horizontal direction in this application and the horizontal direction in the world coordinate system, and the vertical direction is parallel to the vertical direction in the world coordinate system.

The following separately describes the functional modules shown in FIG. 3, to provide an example of a specific implementation. For ease of description, the transmitting module, the receiving optical module, and the detection module in the following are not marked.

1. Transmitting module

In a possible implementation, the transmitting module is configured to transmit signal light. Further, optionally, the signal light may be a linear light beam, or may be a surface light beam.

The following example shows three possible structures of the transmitting module.

Structure 1: The transmitting module includes a light source array and a transmitting optical module.

In a possible implementation, the light source array may be understood as including a plurality of light sources, and the light source in the light source array may be, for example, a vertical cavity surface emitting laser (vertical cavity surface emitting laser, VCSEL) or an edge emitting laser (edge emitting laser, EEL).

It should be noted that the light source array may implement independent addressing, that is, the light source in the light source array may be independently gated (or referred to as lighted, turned on, or powered on), and the gated light source may be used to transmit the signal light. For example, the light sources in the light source array may be gated by column, or the light sources in the light source array may be gated by row, or the light sources in the light source array may be gated by point, or all of the light sources in the light source array may be gated at one time. Regardless of the foregoing gating manner, after all of the light sources in the light source array are gated, full-field-of-view scanning of the lidar may be implemented. It may alternatively be understood as that a full field of view of the lidar may be obtained by splicing transmitting field of views of the light sources in the light source array.

Based on the foregoing structure 1, the following shows three possible structures of the light source array as an example.

Structure 1.1: The light source array includes light sources in M rows and N columns, and both M and N are integers greater than 1.

In a possible implementation, the light source array may gate a light source in a time division manner by row or by column, and signal light transmitted by a light source row gated by row or a light source column gated by column is a linear light beam. Gating a light source in a time division manner by row means to gate at least one row of light sources in the light source array at a same moment. Gating a light source in a time division manner by column means to gate at least one column of light sources in the light source array at a same moment. In other words, the light source row gated by row at a same moment may be one row of light sources or may be a plurality of rows of light sources, and a light source column gated by column may be one column of light sources or may be a plurality of columns of light sources. This is not limited in this application.

FIG. 4a is a schematic diagram of a structure of a light source array according to this application. In this example, M=5 and N=5 are used as an example, that is, the light source array includes 5×5 light sources. When a light source in the light source array is gated in a time division manner by column, signal light transmitted by a gated light source column may be a linear light beam. For example, one column of light sources is gated at a same moment. Specifically, the first column of light sources in the light source array is gated at a first moment, the second column of light sources in the light source array is gated at a second moment, and this rule applies to other columns, and the fifth column of light sources in the light source array is gated at a fifth moment. Signal light transmitted by the gated column of light sources at each moment is a linear light beam. For example, one row of light sources is gated at a same moment. The first row of light sources in the light source array is gated at the first moment, the second row of light sources in the light source array is gated at a second moment, and this rule applies to other rows, and the fifth row of light sources in the light source array is gated at the fifth moment. Signal light transmitted by the gated row of light sources at each moment is a linear light beam.

In another possible implementation, the light source array may gate a light source by surface, and signal light transmitted by the light source gated by surface is a surface light beam. Gating the light source in the light source array by surface means to gate all of the light sources in the light source array at one time, and the light source array includes at least two rows and two columns.

Based on the light source array shown in FIG. 4a, if the light source in the light source array is gated by surface, signal light transmitted by the light source array is a surface light beam. If a light source row in the light source array is gated by row in a time division manner or a light source column in the light source array is gated by column in a time division manner, signal light transmitted by the gated light source row or the gated light source column is a linear light beam.

It may alternatively be understood as that a light source array including M rows and N columns of light sources may transmit signal light of a linear light beam or a surface light beam based on a light source gating manner (that is, a time division gating manner by row, a time division gating manner by column, or a gating manner by surface).

Structure 1.2: The light source array includes light sources in K rows and one column, and K is an integer greater than 1.

FIG. 4b is a schematic diagram of a structure of another light source array according to this application. For example, in FIG. 4b, K=5, that is, the light source array includes 5×1 light sources. Specifically, this column of light sources may be gated at one time, and signal light transmitted by the gated column of light sources is a linear light beam.

Structure 1.3: The light source array includes light sources in one row and L columns, and L is an integer greater than 1.

FIG. 4c is a schematic diagram of a structure of still another light source array according to this application. In FIG. 4c, L=5, that is, the light source array includes 1×5 light sources. Specifically, all of the light sources in the light source array may be gated at one time, that is, the row of light sources is gated at one time, and signal light transmitted by the gated row of light sources is a linear light beam.

For the foregoing structure 1.2 or structure 1.3, in order to implement detection in a large range of the detection region, the lidar may usually further include a scanning module.

In a possible implementation, the scanning module may be configured to reflect, to the detection region, the signal light transmitted by the transmitting module. Specifically, the scanning module rotates around a scanning axis to change a scanning angle of the scanning module, so that the scanning module reflects the signal light from the transmitting module to different positions in the detection region at different scanning angles, thereby implementing scanning of the detection region. Further, optionally, the scanning module is further configured to reflect an echo signal from the detection region to the receiving optical module. It should be noted that the scanning module may rotate around the scanning axis in a continuous operation mode, or rotate around the scanning axis in a step-by-step operation mode. This is not limited in this application. In an actual application, a specific rotation mode may be preset.

For example, the scanning module may be, for example, one or more of a rotating mirror (for example, a four-sided reflection mirror, a six-sided reflection mirror, or an eight-sided reflection mirror), an MEMS mirror, or an oscillating mirror. For example, the scanning module may be a rotating mirror, an MEMS mirror, or an oscillating mirror. For another example, the scanning module may be a combination of a rotating mirror and an oscillating mirror. For another example, the scanning module may be a combination of a rotating mirror and an MEMS mirror. For another example, the scanning module may be a combination of an MEMS mirror and an oscillating mirror. For another example, the scanning module may be a combination of an MEMS mirror, an oscillating mirror, and a rotating mirror. It should be noted that a type of the scanning module is not limited in this application, and any structure that can propagate the signal light transmitted by the transmitting module to the detection region and propagate the echo signal to the receiving optical module may be used. In addition, specific forms of the rotating mirror, the MEMS mirror, and the oscillating mirror are not limited in this application.

In a possible implementation, the transmitting module and the receiving optical module may share one scanning module, and the shared scanning module may be, for example, a rotating mirror, an MEMS mirror, or an oscillating mirror. Alternatively, the transmitting module and the receiving optical module each may correspond to a scanning module. For example, a scanning module corresponding to the transmitting module may be a rotating mirror, and a scanning structure corresponding to the receiving optical module is also a rotating mirror. For another example, the scanning module corresponding to the transmitting module may be an oscillating mirror, and the scanning structure corresponding to the receiving optical module is also an oscillating mirror. For another example, the scanning module corresponding to the transmitting module may be an MEMS mirror, and the scanning structure corresponding to the receiving optical module is also an MEMS mirror. For another example, the scanning module corresponding to the transmitting module may be a rotating mirror, and the scanning structure corresponding to the receiving optical module is also an MEMS mirror. For another example, the scanning module corresponding to the transmitting module may be a rotating mirror, and the scanning structure corresponding to the receiving optical module is also an oscillating mirror. For another example, the scanning module corresponding to the transmitting module may be an MEMS mirror, and the scanning structure corresponding to the receiving optical module is a rotating mirror. For another example, the scanning module corresponding to the transmitting module may be an MEMS mirror, and the scanning structure corresponding to the receiving optical module may also be an oscillating mirror. Details are not listed herein.

FIG. 5 is a schematic diagram of a structure of a transmitting optical module according to this application. The transmitting optical module is configured to propagate the signal light transmitted by the transmitting module to the detection region. In FIG. 5, for example, the transmitting optical module includes three lenses. Because a divergence angle of the signal light from the transmitting module may be large, and there may be a light beam with poor astigmatism quality, the transmitting optical module may further collimate and/or shape and/or homogenize the signal light, so that the divergence angle of the signal light transmitted to the detection region is small, and more signal light can be irradiated to the detection region. It should be understood that a type of the lens included in the transmitting optical module is not limited in this application either. For example, the lens may be a plane-convex lens, a plane-concave lens, a concave-convex lens, a double convex lens, or a double concave lens.

It should be noted that a quantity of lenses included in the transmitting optical module is merely an example. In this application, the quantity of lenses included in the transmitting optical module may be greater than that in FIG. 5, or may be less than that in FIG. 5. The quantity of lenses included in the transmitting optical module is not limited in this application. In addition, in FIG. 5, for example, the transmitting optical module includes only the lens. The transmitting optical module may further include a reflection mirror or the like. This is not limited in this application.

It should be further noted that the transmitting optical module may be rotationally symmetric with respect to an optical axis of the transmitting optical module. For example, an emission mirror in the transmitting optical module may be a monolithic spherical lens, or may be a combination of a plurality of spherical lenses. Alternatively, the transmitting optical module may be a non-rotationally symmetric transmitting optical module. For example, the emission mirror in the transmitting optical module may be a monolithic non-spherical lens, or may be a combination of a plurality of non-spherical lenses. The combination of the plurality of spherical lenses and/or non-spherical lenses helps improve imaging quality of a transmitting optical system and reduce aberration of an optical imaging system.

Based on the foregoing structure 1, the transmitting module may include a light source array and a transmitting optical module. The light source array may be the foregoing structure 1.1, structure 1.2, or structure 1.3, and the transmitting optical module may be, for example, the lens group shown in FIG. 5.

Structure 2: The transmitting module includes a first laser and a first light beam adjustment component.

FIG. 6a is a schematic diagram of a structure of another transmitting module according to this application. The transmitting module includes the first laser and the first light beam adjustment component. The first laser is configured to transmit first signal light, and for example, may be an EEL. The first light beam adjustment component is configured to adjust the first signal light to signal light of a linear light beam. Further, the first light beam adjustment component may be further configured to: shape and/or collimate and/or homogenize the first signal light. The first light beam adjustment component may be, for example, a lens, a lens group, or a lens array.

It should be noted that the transmitting module may include one or more first lasers. This is not limited in this application. In FIG. 6a, for example, the transmitting module includes two first lasers.

Based on the foregoing structure 2, the lidar may further include a scanning module. For a description of the scanning module, refer to the foregoing related descriptions. Details are not described herein again.

Structure 3: The transmitting module includes a second laser and a second light beam adjustment component.

FIG. 6b is a schematic diagram of a structure of another transmitting module according to this application. The transmitting module includes the second laser and the second light beam adjustment component. The second laser is configured to transmit second signal light, and for example, may be a VCSEL. The second light beam adjustment component is configured to adjust the second signal light to the signal light of the surface light beam. Further, the second light beam adjustment component may be further configured to: shape and/or collimate and/or homogenize the second signal light, and the like. The second light beam adjustment component may be, for example, a lens, a lens group, or a lens array. It should be noted that the transmitting module may include one or more second lasers. This is not limited in this application.

It should be noted that the first laser may be the same as or different from the second laser. This is not limited in this application.

2. Receiving optical module

In the following description, a horizontal focal plane refers to a focal plane corresponding to a horizontal direction, a vertical focal plane refers to a focal plane corresponding to a vertical direction, a horizontal equivalent focal power refers to an equivalent focal power in the horizontal direction, and a vertical equivalent focal power refers to an equivalent focal power in the vertical direction.

In a possible implementation, the detection module may be located on the vertical focal plane, and that a light spot that is of an echo signal and that is projected onto the detection module is widened in the horizontal direction includes but is not limited to that the light spot is diffused in the horizontal direction and focused in the vertical direction. The detection module may be located on the horizontal focal plane, and that the light spot that is of the echo signal and that is projected onto the detection module is widened in the vertical direction includes but is not limited to that the light spot is diffused in the vertical direction and focused in the horizontal direction. Specifically, the receiving optical module includes a non-equal-proportion imaging optical component. An equivalent focal length of the non-equal-proportion imaging optical component in the horizontal direction is different from that in the vertical direction. In this way, the non-equal-proportion imaging optical component may separate a vertical focal plane and a horizontal focal plane of a received echo signal.

It may alternatively be understood as that a vertical focal plane and a horizontal focal plane of a light spot reflected to the detection module after the echo signal passes through the non-equal-proportion imaging optical component are separated. When the detection module is located on the vertical focal plane, the light spot that is of the echo signal and that is received by the detection module is focused in the vertical direction and diffused in the horizontal direction. When the detection module is located on the horizontal focal plane, the light spot that is of the echo signal and that is received by the detection module is focused in the horizontal direction and is diffused in the vertical direction. The light spot in the diffusion direction may cover a large light sensitive area of the detection module. Therefore, a quantity of photons received in a unit light sensitive area is reduced, so that an echo signal with higher strength can be detected in the unit light sensitive area, thereby helping increase a dynamic range in which the detection module responds to the echo signal. Further, when the detection module is located on the vertical focal plane, the light spot that is of the echo signal and that is received by the detection module is focused in the vertical direction, that is, a size of the light spot in the vertical direction is unchanged, so that a spatial resolution in the vertical direction is not affected. Similarly, when the detection module is located on the horizontal focal plane, the light spot that is of the echo signal and that is received by the detection module is focused in the horizontal direction, that is, a size of the light spot in the horizontal direction is unchanged, so that a spatial resolution in the horizontal direction is not affected.

Further, optionally, the non-equal-proportion imaging optical component is, for example, a focal power element. An equivalent focal power of the focal power element in the horizontal direction is different from an equivalent focal power of the focal power element in the vertical direction. In other words, an equivalent focal length of the focal length element in the horizontal direction is different from an equivalent focal length of the focal power element in the vertical direction. An echo signal that passes through the focal power element is focused in a horizontal focal plane and a vertical focal plane separately, and the horizontal focal plane is separated from the vertical focal plane. Usually, a difference between the equivalent focal power in the horizontal direction and the equivalent focal power in the vertical direction is small.

In a possible implementation, the focal power element may be a one-dimensional focal power element, and the one-dimensional focal power element is an optical element whose focal length is not 0 in one dimension and is 0 in another dimension. For example, the one-dimensional focal power element may be an optical element whose horizontal focal power is 0 and whose vertical focal power is not 0, or an optical element whose horizontal focal power is not 0 and whose vertical focal power is 0. For example, the one-dimensional focal power element includes at least one or more of a one-dimensional cylindrical mirror, a one-dimensional wedge, or a one-dimensional grating. The one-dimensional cylindrical mirror is, for example, a one-dimensional cylindrical lens or a one-dimensional cylindrical reflection mirror. A reflection surface of the cylindrical reflection mirror is a cylindrical surface, and the reflection surface may be a surface coated with a reflection film. The reflection film includes but is not limited to a common protective aluminum film, a protective ultraviolet reflection aluminum film, a protective silver film, a protective gold film, and the like.

In another possible implementation, the focal power element may alternatively be a two-dimensional focal power element. The two-dimensional focal power element refers to an optical element whose equivalent focal powers in two dimensions are not 0 and whose equivalent focal powers in the two dimensions are different. For example, the two-dimensional focal power element may be an element whose vertical focal length is not 0 and whose horizontal focal length is also not 0. For example, the two-dimensional focal length element may be a lens, a reflection mirror, or a combination of a lens and a reflection mirror. Specifically, the two-dimensional focal length element includes but is not limited to at least one or a combination of a torus mirror, a two-dimensional cylindrical mirror, a saddle mirror, a two-dimensional grating, or a two-dimensional wedge. The torus mirror includes a torus reflection mirror or a torus transmitting mirror, and the two-dimensional cylindrical mirror includes a two-dimensional cylindrical emission mirror or a two-dimensional cylindrical transmitting mirror.

It should be understood that the non-equal-proportion imaging optical component provided above is merely an example, and a specific form of the non-equal-proportion imaging optical component is not limited in this application. Any optical device that can separate a horizontal focal plane from a vertical focal plane of an echo signal may be used.

It should be noted that the one-dimensional focal power element may include one or more one-dimensional cylindrical mirrors and/or one-dimensional wedges and/or one-dimensional gratings. This is not limited in this application. In addition, the two-dimensional focal power element may include one or more torus mirrors and/or two-dimensional cylindrical mirrors and/or saddle mirrors and/or two-dimensional gratings and/or two-dimensional wedges. This is not limited in this application.

In a possible implementation, both surfaces of the focal power element may be curved surfaces, or one surface may be a curved surface, and the other surface may be a plane. A surface that is of the focal power element and that is a curved surface is not limited in this application. When the focal power element is the one-dimensional cylindrical mirror or the two-dimensional cylindrical mirror, one surface of the cylindrical mirror may be a concave surface, and the other surface may be a plane. Such a cylindrical mirror may be referred to as a plane-concave cylindrical mirror. Alternatively, one surface of the cylindrical mirror may be a convex surface, and the other surface may be a plane. Such a cylindrical mirror may be referred to as a plane-convex cylindrical mirror. Alternatively, two surfaces of the cylindrical mirror may both be concave surfaces. Such a cylindrical mirror may be referred to as a double-concave cylindrical mirror. Alternatively, two surfaces of the cylindrical mirror may both be convex surfaces. Such a cylindrical mirror may be referred to as a double-convex cylindrical mirror. Alternatively, one surface of the cylindrical mirror may be a concave surface, and the other surface may be a convex surface. Such a cylindrical mirror may be referred to as a concave-convex cylindrical mirror or a convex-concave cylindrical mirror. A specific shape of the cylindrical mirror is not limited in this application.

A material of the focal power element may be an optical material such as glass, resin, or crystal. When the material of the focal power element is the resin, mass of the receiving optical system can be reduced. When the material of the focal power element is the glass, it helps improve imaging quality of the receiving optical system.

Further, optionally, the receiving optical module may further include a lens group. FIG. 7 is a schematic diagram of a structure of a lens group according to this application. For example, the lens group includes four lenses. The lens group may be rotationally symmetric with respect to an optical axis. For example, the lens in the lens group may be a monolithic spherical lens, or may be a combination of a plurality of spherical lenses (for example, a combination of concave lenses, a combination of convex lenses, or a combination of a convex lens and a concave lens). It should be understood that the convex lens and the concave lens have a plurality of different types. For example, the convex lens includes a double-convex lens, a plane-convex lens, and a concave-convex lens, and the concave lens includes a double-concave lens, a plane-concave lens, and a concave-convex lens. Alternatively, the lens group may be a non-rotationally symmetric lens group. For example, the lens in the lens group may be a monolithic non-spherical lens, or may be a combination of a plurality of non-spherical lenses. The combination of the plurality of spherical lenses or non-spherical lenses helps improve imaging quality of the receiving optical system and reduce aberration of an optical imaging system.

It should be noted that a quantity of lenses included in the lens group shown in FIG. 7 is merely an example. In this application, the lens group may include more or fewer lenses than those in FIG. 7. In addition, the receiving optical module may further include a reflection mirror and the like. This is not limited in this application.

In a possible implementation, a material of the lens in the lens group may be an optical material such as glass, resin, or crystal. When the material of the lens is the resin, it helps reduce mass of the receiving optical system. When the material of the lens is the glass, it helps further improve imaging quality of the receiving optical system. Further, to effectively suppress temperature drift, the lens group includes at least one lens made of a glass material. It should be understood that when the lens group includes at least three lenses, materials of some lenses may be resin, materials of some lenses may be glass, and materials of some lenses may be crystal.

The following shows an example of a possible position relationship between the non-equal-proportion imaging optical component and the lens group in the receiving optical module.

Position relationship 1: The non-equal-proportion imaging optical component may be located at an object side of the lens group.

Based on the position relationship 1, the following provides four possible implementations in which the non-equal-proportion imaging optical component is located at the object side of the lens group.

Implementation 1: The non-equal-proportion imaging optical component is disposed on an inner surface of a window.

To prevent the lidar from being polluted by external light, the window may be used to isolate interference from an external environment. In a possible implementation, the non-equal-proportion imaging optical component may be disposed (for example, bonded) on the inner surface (namely, a surface close to the lidar or referred to as a surface away from the external environment) of the glass window.

Implementation 2: The non-equal-proportion imaging optical component may alternatively be disposed on any surface of a light filter.

In a possible implementation, the lidar may further include the light filter. Before the echo signal is transmitted to the receiving optical module, to prevent an invalid photon outside a spectrum corresponding to the echo signal from interfering with detection of the echo signal by the detection module, the invalid photon may be first filtered out by using the light filter. The non-equal-proportion imaging optical component may be disposed (for example, bonded) on any surface of the light filter.

Implementation 3: The non-equal-proportion imaging optical component is disposed on the first lens that is of the lens group and that is close to the object side.

In a possible implementation, the non-equal-proportion imaging optical component may be disposed (for example, bonded) on the first lens that is of the first lens group and that is close to the object side.

Implementation 4: The non-equal-proportion imaging optical component is disposed independently.

In a possible implementation, the non-equal-proportion imaging optical component may alternatively be independently disposed on the object side of the lens group.

Position relationship 2: The non-equal-proportion imaging optical component may be located at an image side of the lens group. It may alternatively be understood as that the non-equal-proportion imaging optical component is located between the lens group and the detection module.

Based on the position relationship 2, the following example shows two possible implementations in which the non-equal-proportion imaging optical component is located at the image side of the lens group.

Implementation 1: The non-equal-proportion imaging optical component is disposed on the first lens that is of the lens group and that is close to the image side.

In a possible implementation, the non-equal-proportion imaging optical component may be disposed (for example, bonded) on the first lens that is of the lens group and that is close to the image side.

Implementation 2: The non-equal-proportion imaging optical component is disposed independently between the lens group and the detection module.

In a possible implementation, the non-equal-proportion imaging optical component may alternatively be independently disposed between the lens group and the detection module. In other words, the non-equal-proportion imaging optical component may alternatively be independently disposed on the image side of the lens group. FIG. 8 is an example schematic diagram of a structure in which the non-equal-proportion imaging optical component is independently disposed on the image side of the lens group according to this application. In this example, the lens group includes four rotationally symmetric lenses, the non-equal-proportion imaging optical component is a double-concave cylindrical lens, and the non-equal-proportion imaging optical component is located at the image side of the lens group. It should be understood that the receiving optical module may include one or more non-equal-proportion imaging optical components. In FIG. 8, for example, there are two non-equal-proportion imaging optical components. This is not limited in this application.

Position relationship 3: The non-equal-proportion imaging optical component is located between any two adjacent lenses in the lens group, and the lens group includes at least two lenses.

In a possible implementation, the non-equal-proportion imaging optical component may be independently disposed between any two adjacent lenses in the lens group, or may be bonded to a surface that is close to the image side and that is of a lens that is of the lens group and that is close to the object side, or may be bonded to a surface that is close to the object side and that is of a lens close to the image side.

It should be noted that the structure of the receiving optical module provided above is merely an example. Any structure that can extend a light spot corresponding to an echo signal in the horizontal direction or the vertical direction may be used. This is not limited in this application.

3. Detection module

In a possible implementation, the detection module is configured to perform optical-to-electrical conversion on the received widened light spot, to obtain the electrical signal used to determine the association information of the target. The detection module may implement binning of light sensitive cells in a row direction and/or a column direction. When a same quantity of light sensitive cells on which binning is performed are used for both a row and a column, an aspect ratio of an image does not change. When a quantity of light sensitive cells on which binning is performed in a row is different from that in a column, the aspect ratio of the image changes. Optionally, the light sensitive cell may be an SPAD, a digital silicon photomultiplier (silicon photomultiplier, SiPM), an APD, or the like.

For example, the detection module includes a pixel array, and pixels in the pixel array include at least two binned light sensitive cells. In FIG. 1c, for example, a pixel includes three binned light sensitive cells in the row direction.

In a possible implementation, the detection module may be located on the horizontal focal plane, or may be located on the vertical focal plane. The following describes a case in which the detection module is located on the horizontal focal plane or the vertical focal plane.

Case 1: The detection module is located on the vertical focal plane.

Based on the case 1, an equivalent focal power of the non-equal-proportion imaging optical component in the horizontal direction is greater than an equivalent focal power of the non-equal-proportion imaging optical component in the vertical direction. It may be understood that, based on the receiving optical module including the non-equal-proportion imaging optical component, the horizontal focal plane and the vertical focal plane of the echo signal may be separated, and a light beam in the horizontal direction is first focused in the horizontal focal plane, and a light beam in the vertical direction is then focused in the vertical focal plane. That is, in a direction from an object side to an image side along an optical axis of the receiving optical module, the horizontal focal plane is closer to the object side than the vertical focal plane, that is, the vertical focal plane is closer to the image side than the horizontal focal plane. At a position of the vertical focal plane, the light beam in the horizontal direction is diffused. Therefore, when the detection module is located on the vertical focal plane, the received light spot of the echo signal is diffused in the horizontal direction, that is, the light spot of the echo signal is widened in the horizontal direction and focused in the vertical direction.

To reduce impact of background stray light on the echo signal, a first light stop may be placed in the horizontal focal plane.

To enable the echo signal from the detection region to be transmitted to the detection module as much as possible, that is, to avoid loss of the echo signal as much as possible, a shape of the first light stop may be the same as a shape of a light spot corresponding to the echo signal from the detection region, and the shape of the light spot corresponding to the echo signal from the detection region is the same as a shape of a light spot corresponding to the signal light transmitted to the detection region. For example, the shape of the light spot corresponding to the signal light may be a rectangle. Correspondingly, the shape of the first light stop may also be a rectangle (refer to FIG. 9a or FIG. 9b below). For another example, the shape of the light spot corresponding to the signal light may be an ellipse. Correspondingly, the shape of the first light stop may also be an ellipse. For another example, the shape of the light spot of the signal light may be a circle. Correspondingly, the shape of the first light stop may also be a circle. The lidar may include at least one first light stop. It should be understood that the shape of the first light stop may be another regular shape, for example, a quadrilateral, or may be another irregular shape.

For ease of description of the solution, the following uses an example in which the shape of the first light stop is a rectangle for description.

In a possible implementation, a short side of the first light stop is parallel to the horizontal direction, and a long side of the first light stop is parallel to the vertical direction. Further, optionally, to reduce impact of background stray light on the echo signal as much as possible without losing the echo signal, a length $L_1$ of the short side of the first light stop satisfies: $L_1=\alpha_1 \times f_1$. $\alpha_1$ represents a horizontal angle resolution of the receiving optical system, and $f_1$ represents an equivalent focal length $f_1$ of the receiving optical system in the horizontal direction.

It should be understood that the length $L_1$ of the short side of the first light stop may alternatively satisfy: $L_1>\alpha_1 \times f_1$. For example, the length $L_1$ of the short side of the first light stop is equal to $n_1 \times \alpha_1 \times f_1$, and $n_1$ may be a number greater than 1, such as 1.2, 1.5, or 2. For another example, the length $L_1$ of the short side of the first light stop may alternatively satisfy: $L_1=\alpha_1 \times f_1$+a first threshold. In addition, the length $L_1$ of the short side of the first light stop may alternatively satisfy: $L_1<\alpha_1 \times f_1$. For example, the length $L_1$ of the short side of the first light stop is equal to $n_3 \times \alpha_1 \times f_1$, and n3 may be a number less than 1, such as 0.9, 0.85, or 0.8. For another example, the length $L_1$ of the short side of the first light stop may alternatively satisfy: $L_1=\alpha_1 \times f_1$-a second threshold. It should be noted that both the first threshold and the second threshold are numbers greater than 0, and the first threshold and the second threshold may be the same or may be different. This is not limited in this application. When the length $L_1$ of the short side of the first light stop satisfies $L_1>\alpha_1 \times f_1$, utilization of the echo signal can be improved as much as possible. When the length $L_1$ of the short side of the first light stop satisfies $L_1<\alpha_1 \times f_1$, background stray light can be suppressed as much as possible from being transmitted to the detection module.

Further, optionally, a length $L_2$ of the long side of the first light stop satisfies: $L_2 \geq \psi_1 \times f_2$, where $\psi_1$ represents a vertical field of view of the receiving optical system, and $f_2$ represents an equivalent focal length of the receiving optical system in the vertical direction. Based on $L_2 \geq \psi_1 \times f_2$, the echo signal in the vertical direction can be transmitted to the detection module as much as possible, thereby improving utilization of the echo signal. It should be noted that the vertical field of view of the optical receiving system is a maximum angle that can be detected of the optical receiving system in the vertical direction.

Based on the first light stop, an echo signal in a valid field of view (that is, a field of view corresponding to the short side of the first light stop) in the horizontal direction may be allowed to pass through, and background stray light outside the valid field of view may be suppressed (or prevented), thereby helping reduce stray light transmitted to the detection module.

It should be noted that an engineering error is allowed for both the length $L_1$ of the short side of the first light stop and the length $L_2$ of the long side of the first light stop.

Usually, the first light stop is parallel to the light sensitive surface of the detection module, that is, an included angle between the first light stop and the light sensitive surface of the detection module is equal to 0 degrees. Based on this, the length $L_1$ of the short side of the first light stop satisfies: $L_1=\alpha_1 \times f_1$, and the length $L_2$ of the long side of the first light stop satisfies: $L_2 \geq \psi_1 \times f_2$. When the included angle between the first light stop and the light sensitive surface of the detection module is not equal to 0 degrees, to reduce impact of background stray light on the signal light as much as possible, a component $L_x$ of the short side of the first light stop in the horizontal direction satisfies: $L_x=\alpha_1 \times f_1$. Further, optionally, a component $L_y$ of the long side of the first light stop in the vertical direction satisfies: $L_y \geq \psi_1 \times f_2$.

In a possible implementation, a coverage range dx of the light spot in the horizontal direction is related to the equivalent focal length fx of the receiving optical system in the horizontal direction, the equivalent focal length fy of the receiving optical system in the vertical direction, a divergence angle β of the echo signal, and a numerical aperture NA of the image side of the receiving optical system. Refer to the following formula 1.

$$dx = fx \times \tan\beta + (|fy - fx|) \times 2NA \quad \text{Formula 1}$$

It should be noted that, in an actual application, an engineering error is allowed for the coverage range dx of the light spot.

It should be understood that a length of a minor axis of a first light stop in an elliptic shape is consistent with the length of the short side of the first light stop in the rectangle shape, and a length of a major axis of the first light stop in the elliptic shape is consistent with the length of the long side of the light stop in the rectangle shape. For details, refer to the foregoing related descriptions. Details are not described herein again.

In a possible implementation, the first light stop may be, for example, a slit light stop (or referred to as an aperture light stop or an effective light stop). Refer to the following light stop shown in FIG. 9a or FIG. 9b. For another example, the first light stop may alternatively be a required light transmission shape printed on glass or the like by using a silkscreen technology, and the other region is black ink (light transmission is not allowed in the region of black ink). Refer to a light stop shown in FIG. 9c or FIG. 9d. It should be understood that a slit or a light transmission shape of the first light stop determines an aperture angle of the echo signal in the horizontal focal plane.

When the first light stop is the slit light stop, the shape of the first light stop is specifically a shape of a slit (or an aperture) of the first light stop. For example, the shape of the first light stop being the rectangle means that the shape of the slit of the first light stop is a rectangle, and the long side and the short side of the first light stop are a long side and a short side of the slit (or the aperture) of the first light stop. FIG. 9a is a schematic diagram of a range that is in the pixel array and that is of light sensitive cells covered by a light spot corresponding to an echo signal that has passed through the first light stop and the non-equal-proportion imaging optical component according to this application. FIG. 9b is a schematic diagram of a range that is in the pixel array and that is of light sensitive cells covered by a light spot corresponding to an echo signal that has passed through the first light stop. It can be learned from a comparison between FIG. 9a and FIG. 9b that, after the echo signal passes through the non-equal-proportion imaging optical component, the light spot corresponding to the echo signal extends in the horizontal direction, so that a large quantity of light sensitive cells in the detection module can be covered. For another example, the shape of the first light stop being the ellipse means that the shape of the slit of the first light stop is an ellipse, and a major axis and a minor axis of the first light stop are a major axis and a minor axis of the slit of the first light stop.

When the first light stop is the required light transmission shape printed on the glass or the like by using the silkscreen technology, the shape of the first light stop is specifically a light transmission shape of the first light stop. For example, the shape of the first light stop being the rectangle means that the light transmission shape of the first light stop is a rectangle, and the long side and the short side of the first light stop are a long side and a short side of the light transmission shape of the first light stop. FIG. 9c is a schematic diagram of another coverage range that is in the pixel array and that is of an echo signal that has passed through the first light stop and the non-equal-proportion imaging optical component according to this application. FIG. 9d is a schematic diagram of a range that is in the pixel array and that is of light sensitive cells covered by a light spot corresponding to an echo signal that has passed through the first light stop. It can be learned from a comparison between FIG. 9c and FIG. 9d that, after the echo signal passes through the non-equal-proportion imaging optical component, the light spot corresponding to the echo signal extends in the horizontal direction, so that a large quantity of light sensitive cells in the detection module can be covered. For another example, the shape of the first light stop being the ellipse means that the shape of the light transmission shape of the first light stop is an ellipse, and a major axis and a minor axis of the first light stop are a major axis and a minor axis of the light transmission shape of the first light stop.

Case 2: The detection module is located on the horizontal focal plane.

Based on the case 2, the equivalent focal power of the non-equal-proportion imaging optical component in the vertical direction is greater than the equivalent focal power of the non-equal-proportion imaging optical component in the horizontal direction. It may be understood that, based on the receiving optical module including the non-equal-proportion imaging optical component, the horizontal focal plane and the vertical focal plane of the echo signal may be separated, and the light beam in the vertical direction is first focused on the vertical focal plane, and the light beam in the horizontal direction is then focused on the horizontal focal plane. That is, in the direction from the object side to the image side of the receiving optical module, the vertical focal plane is closer to the object side than the horizontal focal plane, and the horizontal focal plane is closer to the image side than the vertical focal plane. At a position of the horizontal focal plane, the light beam in the vertical direction is diffused. Therefore, when the detection module is located on the horizontal focal plane, the received light spot of the echo signal is diffused in the vertical direction, that is, the light spot of the echo signal is extended in the vertical direction and focused in the horizontal direction.

To reduce impact of background stray light on the echo signal, a second light stop may be placed in the vertical focal plane. A shape of the second light stop is the same as the shape of the light spot of the echo signal from the detection region. For the shape of the second light stop, refer to the foregoing description of the first light stop. Details are not described herein again.

For ease of description of the solution, the following uses an example in which the shape of the second light stop is a rectangle for description.

In a possible implementation, a short side of the second light stop is parallel to the vertical direction, and a long side of the second light stop is parallel to the horizontal direction. Further, optionally, to reduce impact of background stray light on the echo signal as much as possible, a length L3 of the short side of the second light stop satisfies: $L_3=\alpha_2\times f_2$. $\alpha_2$ represents a vertical angle resolution of the receiving optical system, and $f_2$ represents the equivalent focal length of the receiving optical system in the vertical direction.

It should be understood that the length $L_3$ of the short side of the second light stop may alternatively satisfy: $L_3>\alpha_2\times f_2$. For example, the length $L_2$ of the short side of the second light stop is equal to $n_2\times\alpha_2\times f_2$, where $n_2$ may be 1.2, 1.5, 2, or the like, and $n_2$ may be the same as or different from $n_1$. For another example, the length $L_2$ of the short side of the second light stop may alternatively satisfy: $L_2=\alpha_2\times f_2$+a third threshold. In addition, the length L3 of the short side of the second light stop may alternatively satisfy: $L3<\alpha_2\times f_2$. For example, the length $L_2$ of the short side of the second light stop is equal to $n_4\times\alpha_2\times f_2$, where $n_4$ may be a number less than 1, such as 0.95, 0.8, or 0.7, and $n_4$ may be the same as or different

from $n_2$. For another example, the length $L_2$ of the short side of the second light stop may alternatively satisfy: $L_2=\alpha_2\times f_2$-a fourth threshold. It should be noted that both the third threshold and the fourth threshold are numbers greater than 0, and the first threshold, the second threshold, the third threshold, and the fourth threshold may be the same or may be different. This is not limited in this application. When the length $L_3$ of the short side of the second light stop satisfies $L_3>\alpha_2\times f_2$, utilization of the echo signal can be improved as much as possible. When the length $L_3$ of the short side of the second light stop satisfies: $L_3<\alpha_2\times f_2$, background stray light can be suppressed as much as possible from being transmitted to the detection module.

Further, optionally, a length $L_4$ of the long side of the second light stop satisfies: $L_4\geq\psi_2\times f_1$, where $\psi_2$ represents a horizontal field of view of the receiving optical system, and $f_1$ represents the equivalent focal length $f_1$ of the receiving optical system in the horizontal direction. It should be noted that the horizontal field of view of the optical receiving system is a maximum angle that can be detected of the optical receiving system in the horizontal direction.

Generally, the second light stop is parallel to the light sensitive surface of the detection module, that is, an included angle between the second light stop and the light sensitive surface of the detection module is equal to 0 degrees. Based on this, the length $L_3$ of the short side of the second light stop satisfies $L_3=\alpha_2\times f_2$, and the length $L_4$ of the long side of the second light stop satisfies $L_4\geq\psi_2\times f_1$. When the included angle between the second light stop and the light sensitive surface of the detection module is not equal to 0 degrees, to reduce impact of background stray light on the signal light as much as possible, a component $L_y$ of the short side of the second light stop in the vertical direction satisfies: $L_y=\alpha_2\times f_2$. Further, optionally, a component $L_x$ of the long side of the second light stop in the horizontal direction satisfies: $L_x\geq\psi_2\times f_1$.

In a possible implementation, the second light stop is located on the vertical focal plane, and is configured to allow an echo signal in an effective field of view (that is, a field of view corresponding to a range of the short side of the second light stop) in the vertical direction to pass through, and can prevent background stray light outside the effective field of view from passing through, thereby helping reduce stray light transmitted to the detection module. It should be noted that, for an optical path of the second light stop in the vertical focal plane, refer to an optical path of the first light stop in the horizontal focal plane, and details are not described herein again.

In a possible implementation, a coverage range dy of the light spot in the vertical direction is related to the equivalent focal length fx of the receiving optical system in the horizontal direction, the equivalent focal length fy of the receiving optical system in the vertical direction, the divergence angle β of the echo signal, and the numerical aperture NA of the image side of the receiving optical system. Refer to the following formula 2.

$$dy=fy\times\tan\beta+(|fy-fx|)\times 2NA \quad \text{Formula 2}$$

It should be noted that, in an actual application, an engineering error is allowed for the coverage range dy of the light spot.

It should be understood that a length of a minor axis of a second light stop in an elliptic shape is consistent with the length of the short side of the second light stop in the rectangle shape, and a length of a major axis of the second light stop in the elliptic shape is consistent with the length of the long side of the light stop in the rectangle shape. For details, refer to the foregoing related descriptions. Details are not described herein again.

For example, the second light stop may be, for example, a slit light stop (or referred to as an aperture light stop or an effective light stop, and reference may be made to FIG. 9a or FIG. 9b). For another example, the second light stop may alternatively be a required light transmission shape printed on glass or the like by using a silkscreen technology (refer to FIG. 9c or FIG. 9d), and the other region is black ink (light transmission is not allowed in the region of black ink). It should be understood that a slit or a light transmission shape of the second light stop determines an aperture angle of the echo signal in the vertical focal plane.

When the second light stop is the slit light stop, the shape of the second light stop is specifically a shape of a slit (or an aperture) of the second light stop. For example, the shape of the second light stop being the rectangle means that the shape of the slit of the second light stop is a rectangle shape, and the long side and the short side of the second light stop are a long side or a short side of the slit (or the aperture) of the second light stop. For another example, the shape of the second light stop being the ellipse means that the shape of the slit of the second light stop is an ellipse, and a major axis and a minor axis of the second light stop are a major axis and a minor axis of the slit of the second light stop. When the second light stop is the required light transmission shape printed on the glass or the like by using the silkscreen technology, the shape of the second light stop is specifically a light transmission shape of the second light stop. For example, the shape of the second light stop being the rectangle means that the light transmission shape of the second light stop is a rectangle, and the long side and the short side of the second light stop are a long side and a short side of the light transmission shape of the second light stop. For another example, the shape of the second light stop being the ellipse means that the shape of the light transmission shape of the second light stop is an ellipse, and a major axis and a minor axis of the second light stop are a major axis and a minor axis of the light transmission shape of the second light stop.

When the detection module is placed horizontally level and vertically upright, correspondingly, the non-equal-proportion imaging optical component is also placed horizontally level and vertically upright, and the first light stop or the second light stop may also be placed horizontally level and vertically upright. When the detection module rotates around the optical axis of the receiving optical module by an angle, the non-equal-proportion imaging optical component also needs to rotate by a same angle in a same direction as the detection module, so that the horizontal focal plane or the vertical focal plane that is separated by the non-equal-proportion imaging optical component matches the detection module, and the first light stop or the second light stop may also rotate by a same angle in a same direction as the detection module.

In this application, the lidar may further include a processing control module. Details are described below.

4. Processing control module

In a possible implementation, the processing control module is configured to: receive the electrical signal from the detection module, and determine the association information of the target based on the electrical signal. Further, optionally, the processing control module may further plan a driving route based on the determined association information of the target, for example, avoiding an obstacle on a path to travel.

For example, the processing control module may include a processing unit and a control unit. The processing unit may be a general purpose processor, a field programmable gate array (field programmable gate array, FPGA), a signal data processing (digital signal processing, DSP) circuit, an application specific integrated circuit (application specific integrated circuit, ASIC), or another programmable logic device. The control unit includes a driver of the scanning module, a driver of a light source module, a driver of the detection module, and the like. These drivers may be integrated together, or may be separated.

Based on the foregoing content, the following provides two possible implementations of the lidar with reference to a specific hardware structure, to further facilitating understanding of the structure and function principle of the lidar.

For ease of description of the solution, the following uses an example in which a column direction corresponds to a vertical direction and a row direction corresponds to a horizontal direction for description.

FIG. 10 is a schematic diagram of an architecture of a lidar according to this application. The lidar includes a transmitting module and a receiving module, and may further include a processing module. The transmitting module includes a light source array and a transmitting optical module, and the receiving module includes a pixel array and a receiving optical module. For example, the light source array includes 3×9 light sources, the pixel array includes 3×9 pixels, and 1×3 light sensitive cells are binned by row for each pixel. A light source in the light source array may implement independent addressing, and may be specifically the foregoing VCSEL or EEL. For the light source array, refer to the description of the light source array in the foregoing structure 1.1. For the transmitting optical module, the pixel array, and the receiving optical module, refer to the foregoing related descriptions. Details are not described herein again.

Based on the lidar shown in FIG. 10, a light source column in the light source array may be gated in a time division manner by column, and a corresponding pixel column in the pixel array may be gated in a time division manner by column. For another example, a light source row in the light source array is gated in a time division manner by row, and a corresponding pixel column in the pixel array is gated in a time division manner by row. It may alternatively be understood as that there is a correspondence between a light source row in the light source array and a pixel row in the pixel array, and there is a correspondence between a light source column in the light source array and a pixel column in the pixel array. Based on such a gating manner, a working mode of the lidar may be referred to as a line-scanning line-receiving mode. The line-scanning line-receiving mode may also be understood as that signal light transmitted by the transmitting module is a linear light beam, and an echo signal received by the detection module is also a linear light beam.

With reference to FIG. 10, if the signal light of the linear light beam transmitted by the gated light source is not widened, a light spot transmitted to the pixel array may cover one column of cells; or if a signal of the linear light beam transmitted by the gated light source is extended to two times in the horizontal direction by using the receiving optical module, a light spot transmitted to the pixel array may cover two columns of cells. It may alternatively be understood as that the light spot corresponding to the echo signal is pulled up in the horizontal direction by using the receiving optical module (that is, the light spot projected onto a light sensitive surface of the pixel array is imaged in the vertical direction and the horizontal direction in a non-equal proportion), so as to increase a quantity of light sensitive cells covered by the light spot in the horizontal direction, thereby increasing a dynamic range of the lidar.

For ease of description of the solution, the following uses an example of gating a light source array and a pixel array by column for description.

In the row direction, the pixel array is a pixel obtained by binning a plurality of light sensitive cells, and the transmitting module gates a light source column in the light source array in a time division manner by column. Based on this, a detection region of the lidar may be divided into a plurality of equal parts by column, and light source columns in the light source array are sequentially gated, and a corresponding linear light beam may sequentially scan these column regions in the detection region, so that all regions in the detection region can be scanned. After the echo signal is propagated by the receiving optical module, the light spot corresponding to the echo signal is widened in the row direction, and the widened light spot is projected onto the detection module. A pixel column corresponding to the gated light source column in the detection module receives the widened light spot. Because the light spot is widened in the row direction, the light spot corresponding to the echo signal may cover a large quantity of (in this example, three light sensitive cells are covered) light sensitive cells in the row direction. Therefore, a quantity of photons detected by a single light sensitive cell can be reduced, an anti-saturation capability of a unit light sensitive cell can be improved, and the dynamic range of the lidar can be effectively improved. In addition, because there is no binned light sensitive cell in the column direction, a spatial resolution in the column direction can be maintained without being reduced. It may alternatively be understood as that when the lidar performs scanning by column, a dynamic range in the row direction of the pixel array may be increased, and the spatial resolution in the column direction can be maintained without being changed.

The following describes the foregoing beneficial effects in detail with reference to a simulation result.

(a) in FIG. 11 is a schematic diagram of a result that a light spot corresponding to an echo signal is not widened (or stretched) according to this application, and (b) in FIG. 11 is a schematic diagram of a result that a light spot corresponding to an echo signal is widened in the horizontal direction according to this application. (a) in FIG. 11 uses an equal-proportion imaging optical component, and (b) in FIG. 11 uses a non-equal-proportion imaging optical component. (a) in FIG. 12 is a three-dimensional image obtained by simulating (a) in FIG. 11, and (b) in FIG. 12 is a three-dimensional image obtained by simulating (b) in FIG. 11. In FIG. 11 and FIG. 12, for example, an echo signal falls near an $84^{th}$ column of a pixel array. For (a) and (b) in FIG. 11, points are separately selected for simulation in a $200^{th}$ row, a $300^{th}$ row, and a $400^{th}$ row, to obtain (a), (b), and (c) in FIG. 13.

It can be learned from a simulation result in FIG. 13 that, when the points are selected in the $200^{th}$ row, the $300^{th}$ row, and the $400^{th}$ row, central positions of the equal-proportion imaging optical component and the non-equal-proportion imaging optical component that are used overlap near the $84^{th}$ column, and an accumulated quantity of photons received by using the non-equal-proportion imaging optical component is approximately twice an accumulated quantity of photons received by using the equal-proportion imaging optical component. In other words, the light spot corresponding to the echo signal can be widened in the horizontal direction when the non-equal-proportion imaging optical component is used for receiving, so that a quantity of photons received in a single light sensitive cell can be reduced, an anti-saturation capability of the detection module can be improved, and a dynamic range of the detection system can be improved.

Based on the lidar shown in FIG. 10, surface-light emitting surface-receiving may further be implemented. For example, all light sources are gated at one time, and all pixels are gated. That is, signal light of a surface light beam is transmitted by the light source array, and an echo signal of a surface light beam is received by the pixel array.

FIG. 14a is a schematic diagram of an architecture of another lidar according to this application. The lidar includes a transmitting module, a receiving module, and a scanning module, and may further include a processing module (not shown in FIG. 14a). With reference to FIG. 14b, the transmitting module includes a light source array and a transmitting optical module, and the receiving module includes a pixel array and a receiving optical module. For example, the light source array includes 1×9 light sources, the pixel array includes 1×9 pixels, and 1×3 light sensitive cells are binned by row for each pixel. A light source in the light source array may implement independent addressing, and may be specifically the foregoing VCSEL or EEL. For the light source array, refer to the description of the light source array in the foregoing structure 1.2 or structure 1.3. For the transmitting optical module, the pixel array, the receiving optical module, and the scanning module, refer to the foregoing related descriptions. Details are not described herein again. It should be understood that a window in the lidar is used to isolate the lidar from an external environment.

Based on FIG. 14b, a gated light source array is configured to transmit signal light of a linear light beam, and the linear light beam may be projected onto different positions in a detection region by rotating the scanning module, so as to implement scanning of the detection region. Further, the scanning module reflects echo signals from the different positions in the detection region to the receiving optical module, and the receiving optical module widens a light spot corresponding to the echo signal in a horizontal direction or a vertical direction, and transmits a widened light spot to the pixel array. It should be understood that, in FIG. 14b, one light source, one pixel, and one light spot are used as an example. When the light source array is gated, a column of light spot is transmitted to the detection region. Correspondingly, each pixel in the pixel array may receive a light spot that is widened in a corresponding row direction.

It should be noted that, when the scanning module is a reflective scanning module, the signal light emitted by the lidar to the detection region and the echo signal from the detection region have a same direction. Alternatively, it may be understood that the signal light transmitted by the lidar to the detection region and the echo signal from the detection region are parallel light. The optical path change of the signal light and the echo signal by the scanning module shown in FIG. 14b is merely a possible example.

It should be understood that, in this application, the lidar may further be another possible combination of the transmitting module, the receiving optical module, the detection module, and the scanning module. For example, the transmitting module in FIG. 10 may be replaced with the transmitting module in the structure 3. The light source module in FIG. 14b may be replaced with the light source module in the foregoing structure 2. Herein, the lidar further includes a scanning module (refer to FIG. 14bb), and the like. These are not listed one by one herein. It may alternatively be understood as that any proper combination of the transmitting module, the receiving module, the scanning module, and the detection module that are shown in the foregoing examples falls within the scope of the lidar included in this application.

In a possible implementation, the lidar may be installed in a vehicle. Refer to FIG. 15. In this example, a position of the lidar in the vehicle is merely an example, and the lidar may be further disposed at any possible position around a vehicle body. This is not limited in this application. Further, optionally, after determining association information of a target, the lidar may send the association information of the target to the vehicle, and the vehicle may plan a driving route based on the determined association information of the target, for example, avoiding an obstacle on a path on which the vehicle is to travel. It should be understood that a shape of the lidar shown in FIG. 15 is merely an example, and the lidar may alternatively be presented in another shape in appearance, for example, may be a rectangle. This is not specifically limited in this application.

Based on the foregoing described structure and function principles of the lidar, this application may further provide a terminal device. FIG. 16 is a schematic diagram of a structure of a terminal device according to this application. The terminal device 1600 may include the lidar 1601 in any one of the foregoing embodiments. Further, optionally, the terminal device may further include a processor 1602, and the processor 1602 is configured to invoke a program or instructions to control the lidar 1601 to obtain an electrical signal. Further, the processor 1602 may further receive an electrical signal from the lidar 1601, and determine association information of a target based on the electrical signal. Optionally, the terminal device may further include a memory 1603, and the memory 1603 is configured to store the program or the instructions. Certainly, the terminal device may further include another device, for example, a memory or a wireless communication apparatus.

For the lidar 1601, refer to the foregoing description of the lidar. Details are not described herein again.

The processor 1602 may include one or more processing units. For example, the processor 1602 may include an application processor (application processor, AP), a graphics processing unit (graphics processing unit, GPU), an image signal processor (image signal processor, ISP), a controller, a digital signal processor (digital signal processor, DSP), and the like. Different processing units may be independent devices, or may be integrated into one or more processors.

The memory 1603 includes but is not limited to a random access memory (random access memory, RAM), a flash memory, a read-only memory (read-only memory, ROM), a programmable ROM (programmable ROM, PROM), an erasable PROM (erasable PROM, EPROM), an electrically EPROM (electrically EPROM, EEPROM), a register, a hard disk, a removable hard disk, a CD-ROM, or a storage medium in any other form well-known in the art. For example, a storage medium is coupled to a processor, so that the processor can read information from the storage medium and write information into the storage medium. Certainly, the storage medium may be a component of the processor. The processor and the storage medium may be disposed in an ASIC.

In a possible implementation, the processor 1602 may further plan a driving route of the terminal device based on the determined association information of the target, for example, avoiding an obstacle in a driving path.

For example, the terminal device may be, for example, a vehicle (for example, a driverless vehicle, a smart vehicle, an electric vehicle, or a digital vehicle), a robot, a surveying and mapping device, an uncrewed aerial vehicle, a smart home device (for example, a television, a robot vacuum cleaner, a smart desk lamp, an acoustic system, an intelligent lighting system, an electrical appliance control system, home background music, a home theater system, an intercom system, or video surveillance), an intelligent manufacturing device (for example, an industrial device), an intelligent transportation device (for example, an AGV, an uncrewed transport vehicle, or a truck), or an intelligent terminal (for example, a mobile phone, a computer, a tablet computer, a palmtop computer, a desktop computer, a headset, an acoustic device, a wearable device, an invehicle device, a virtual reality device, or an augmented reality device).

It should be noted that in the foregoing embodiments of this application, in a horizontal direction may be the horizontal direction, and in a vertical direction may be the vertical direction. Correspondingly, a horizontal focal power refers to a focal power in the horizontal direction, and a vertical focal power refers to a focal power in the vertical direction.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "perpendicularity" does not mean absolute perpendicularity, and an engineering error to a specific degree may be allowed. "At least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural. In the text descriptions of this application, the character "/" usually indicates an "or" relationship between associated objects. In a formula in this application, the character "/" indicates a "division" relationship between associated objects. In addition, the word "example" in this application is used to represent giving an example, an illustration, or a description. Any embodiment or design scheme described as an "example" in this application should not be explained as being more preferred or having more advantages than another embodiment or design scheme. Alternatively, it may be understood as that the word "example" is used to present a concept in a specific manner, and does not constitute a limitation on this application.

It may be understood that various numbers in this application are merely used for differentiation for ease of description, and are not used to limit the scope of embodiments of this application. The sequence numbers of the foregoing processes do not mean execution sequences, and the execution sequences of the processes should be determined based on functions and internal logic of the processes. The terms "first", "second", and another similar expression are intended to distinguish between similar objects but do not necessarily describe a specific order or sequence. In addition, the terms "include", "have", and any variant thereof are intended to cover nonexclusive inclusion, for example, inclusion of a series of steps or units. A method, a system, a product, or a device is not necessarily limited to clearly listed steps or units, but may include other steps or units that are not clearly listed and that are inherent to the process, the method, the product, or the device.

Although this application is described with reference to specific features and embodiments thereof, it is clear that various modifications and combinations may be made to them without departing from the spirit and scope of this application. Correspondingly, the specification and accompanying drawings are merely examples for description of the solutions defined by the appended claims, and are considered as any of or all modifications, variations, combinations or equivalents that cover the scope of this application.

It is clear that a person skilled in the art can make various modifications and variations to this application without departing from the spirit and the scope of the present invention. This application is intended to cover these modifications and variations provided that they fall within the scope of protection defined by the following claims and their equivalent technologies.

## Claims

1. A lidar, comprising a transmitting module, a receiving optical module, and a detection module, wherein

   the transmitting module is configured to transmit signal light;
   the receiving optical module is configured to: receive an echo signal, widen a light spot corresponding to the echo signal in a horizontal direction or a vertical direction, and project a widened light spot onto the detection module, wherein the echo signal comprises reflected light obtained by reflecting the signal light by a target in a detection region; and
   the detection module is configured to perform optical-to-electrical conversion on the received widened light spot to obtain an electrical signal, wherein the electrical signal is used to determine association information of the target.

2. The lidar according to claim 1, wherein the receiving optical module comprises a non-equal-proportion imaging optical component.

3. The lidar according to claim 2, wherein the non-equal-proportion imaging optical component is configured to:

   separate a horizontal focal plane corresponding to the echo signal in the horizontal direction from a vertical focal plane corresponding to the echo signal in the vertical direction; and
   the detection module is located on the horizontal focal plane or the vertical focal plane.

4. The lidar according to any one of claims 1 to 3, wherein the signal light is a linear light beam.

5. The lidar according to claim 4, wherein the transmitting module comprises a light source array, and a light source is gated in a time division manner by row or by column in the light source array; and
   a light source row gated by row or a light source column gated by column is used to transmit the signal light of the linear light beam.

6. The lidar according to claim 4, wherein the transmitting module comprises a first laser and a first light beam adjustment component;

   the first laser is configured to transmit first signal light; and
   the first light beam adjustment component is configured to adjust the first signal light to the signal light of the linear light beam.

7. The lidar according to any one of claims 4 to 6, wherein the lidar further comprises a scanning module, and the scanning module is configured to reflect the signal light from the transmitting module to the detection region.

**8.** The lidar according to claim 7, wherein the scanning module comprises at least one of a rotating mirror, an oscillating mirror, and a micro electro-mechanical system MEMS mirror.

**9.** The lidar according to any one of claims 5 to 8, wherein the detection module comprises a pixel array; and a pixel is gated in a time division manner by row or by column in the pixel array.

**10.** The lidar according to any one of claims 1 to 3, wherein the signal light is a surface light beam.

**11.** The lidar according to claim 10, wherein the transmitting module comprises a light source array, and a light source is gated by surface in the light source array; and
the light source gated by surface is used to transmit the signal light of the surface light beam.

**12.** The lidar according to claim 10, wherein the transmitting module comprises a second laser and a second light beam adjustment component;

> the second laser is configured to transmit second signal light; and
> the second light beam adjustment component is configured to adjust the second signal light to the signal light of the surface light beam.

**13.** The lidar according to any one of claims 10 to 12, wherein the detection module comprises a pixel array; and
a pixel is gated by surface in the pixel array.

**14.** The lidar according to claim 9 or 13, wherein a pixel in the pixel array comprises at least two binned light sensitive cells.

**15.** The lidar according to any one of claims 1 to 14, wherein the lidar further comprises a processing control module, and the processing control module is configured to: receive the electrical signal from the detection module, and determine the association information of the target based on the electrical signal.

**16.** A terminal device, comprising the lidar according to any one of claims 1 to 15.

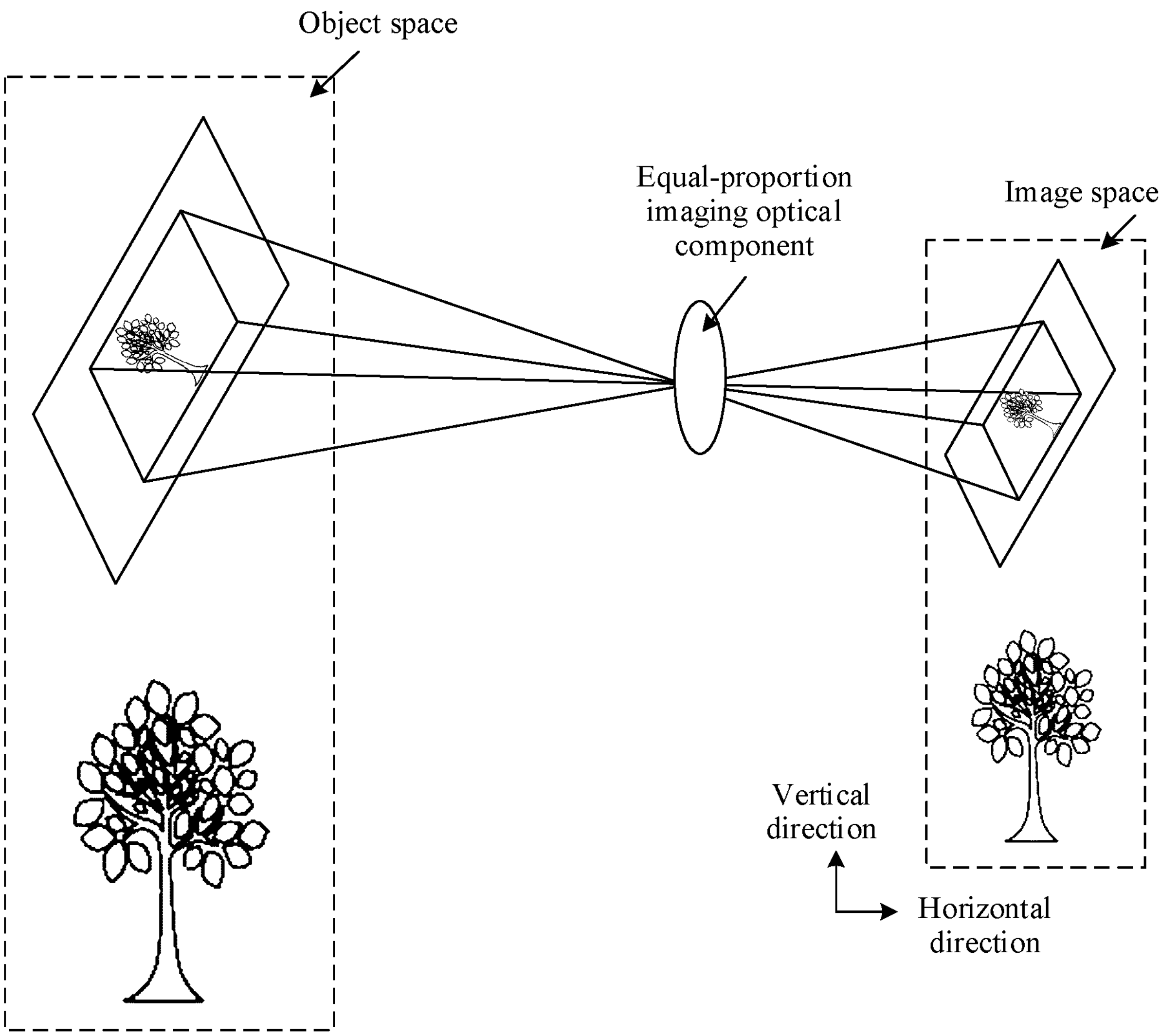
Object space
Equal-proportion imaging optical component
Image space
Vertical direction
Horizontal direction

FIG. 1a

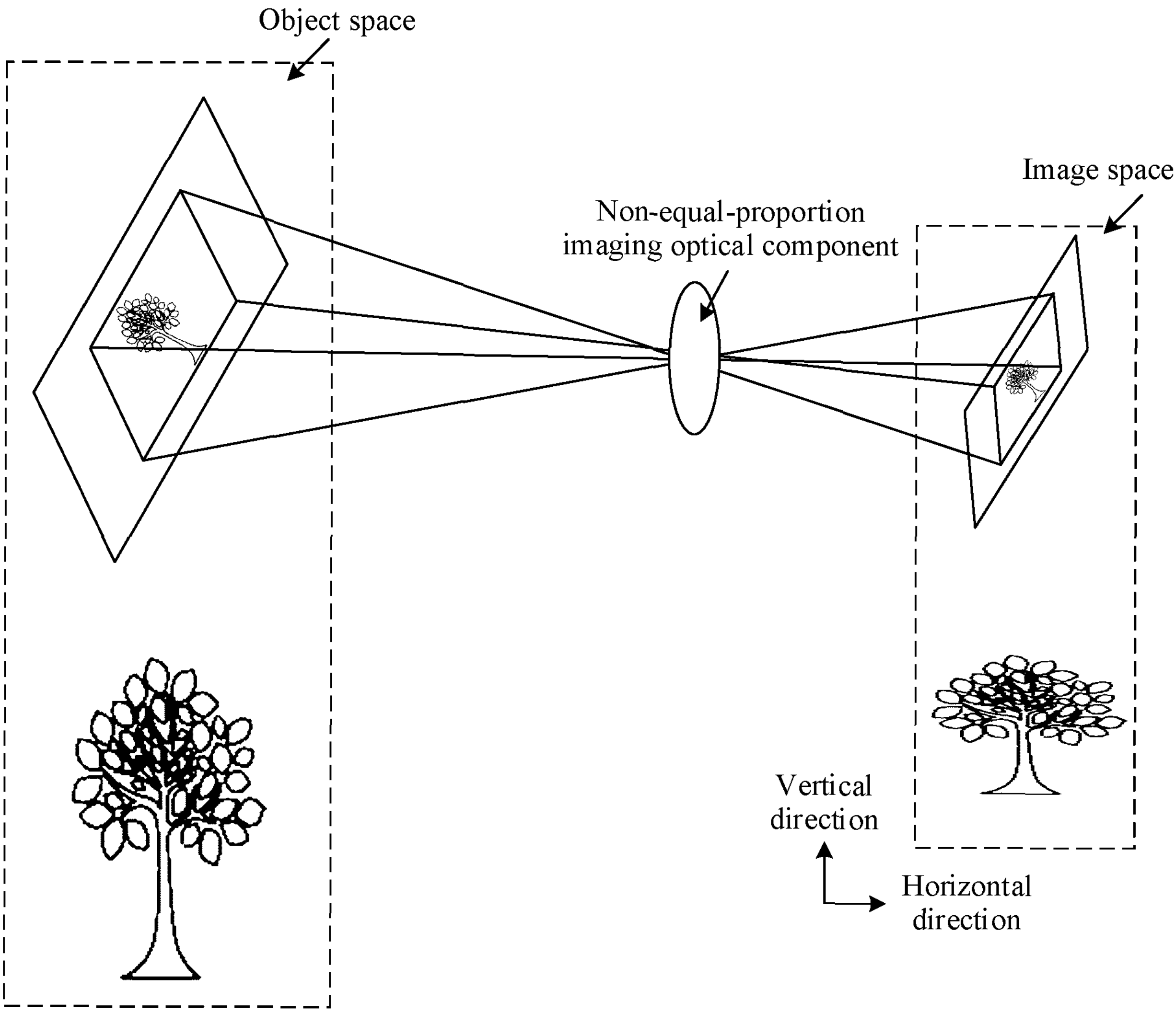
Object space
Image space
Non-equal-proportion imaging optical component
Vertical direction
Horizontal direction

FIG. 1b

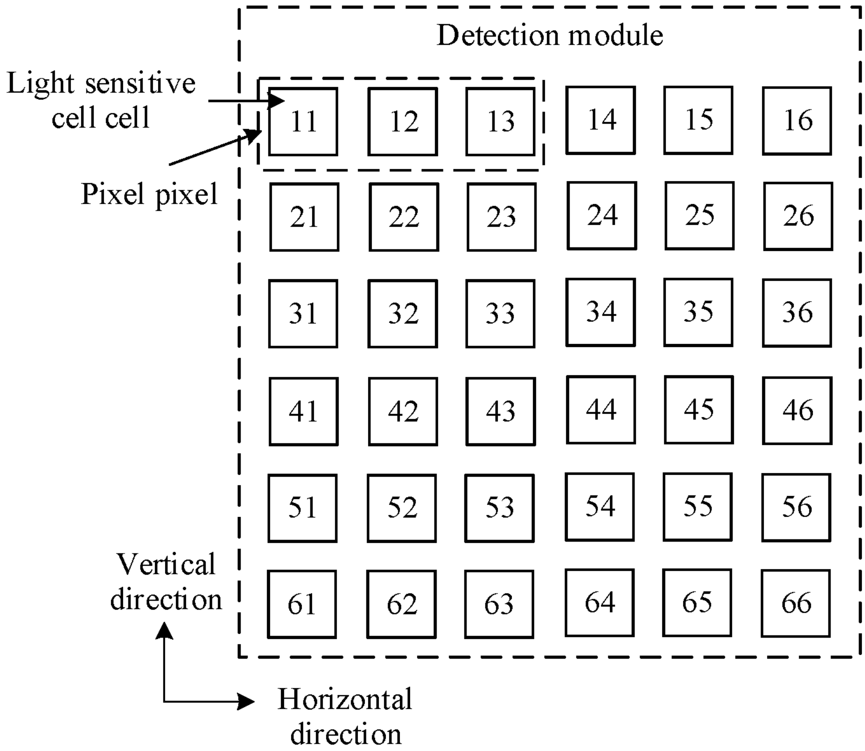
Detection module
Light sensitive cell cell
Pixel pixel
11
12
13
14
15
16
21
22
23
24
25
26
31
32
33
34
35
36
41
42
43
44
45
46
51
52
53
54
55
56
61
62
63
64
65
66
Vertical direction
Horizontal direction

FIG. 1c

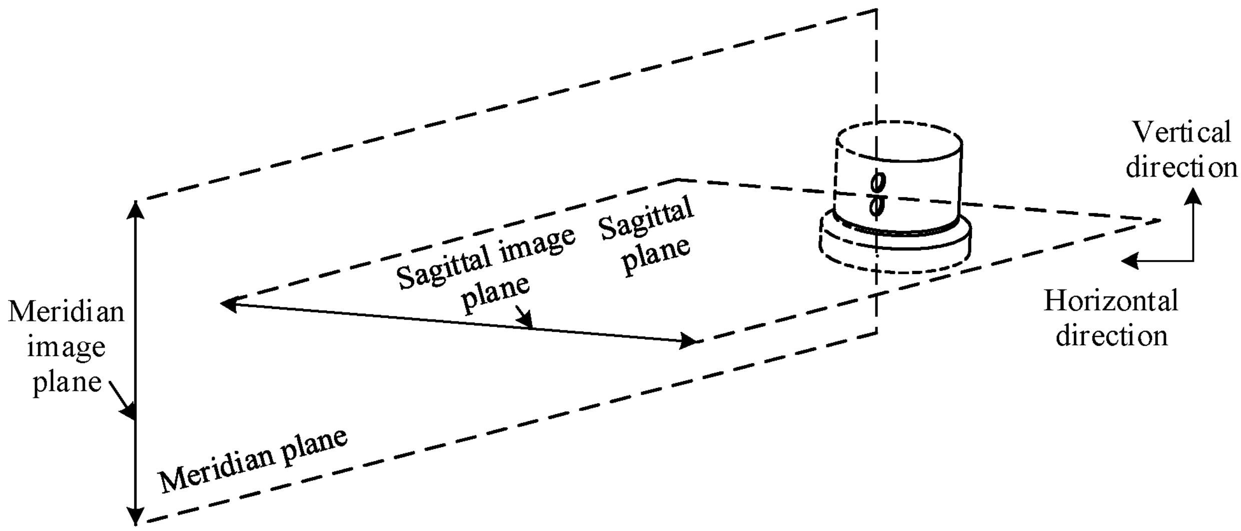
Sagittal image plane
Sagittal plane
Meridian image plane
Meridian plane
Vertical direction
Horizontal direction

FIG. 1d

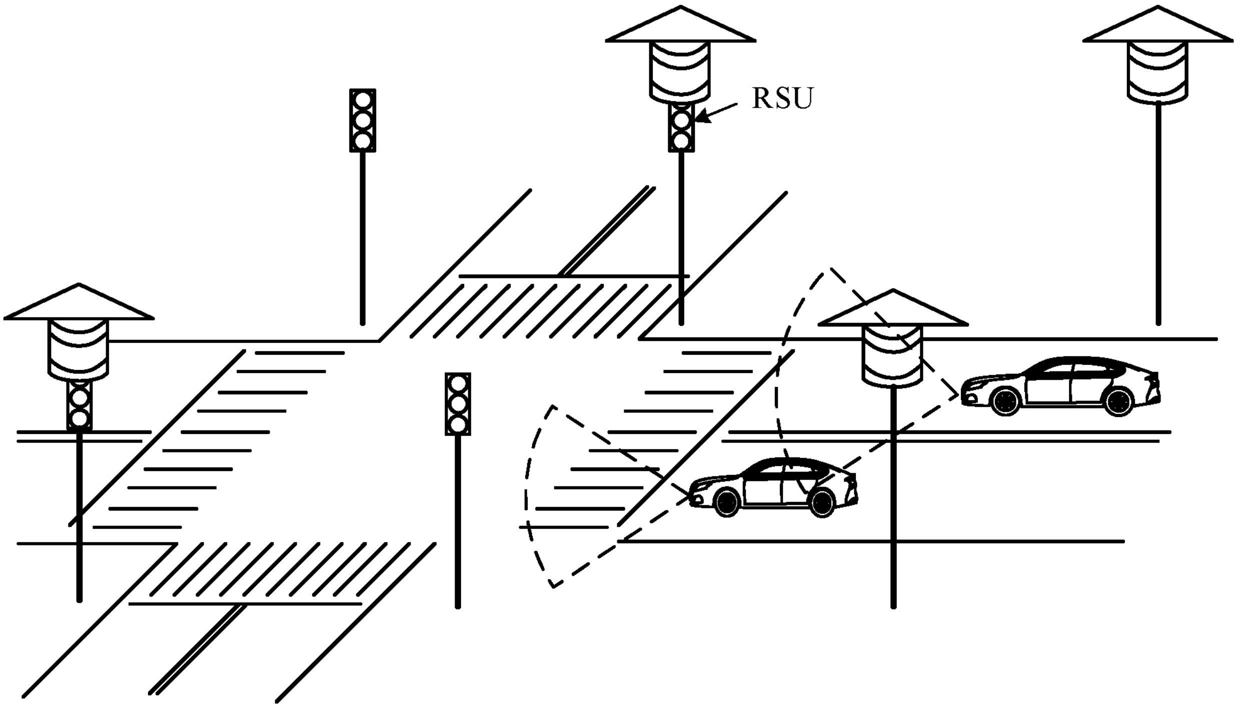
RSU

FIG. 2

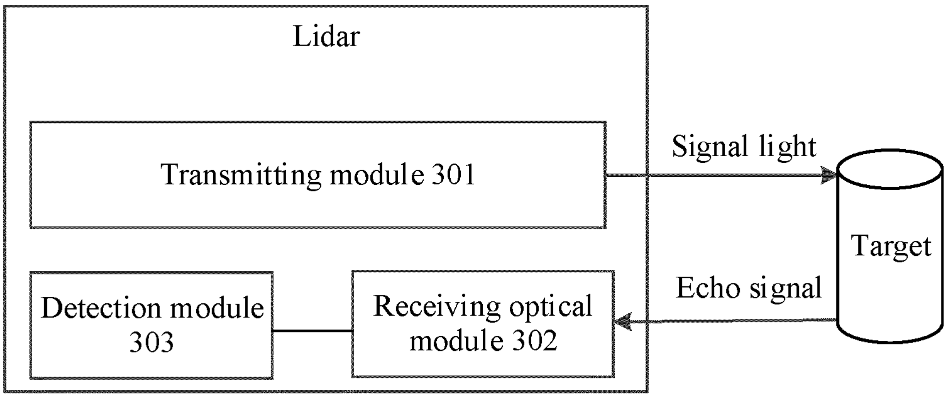
Lidar
Transmitting module 301
Detection module 303
Receiving optical module 302
Signal light
Target
Echo signal

FIG. 3

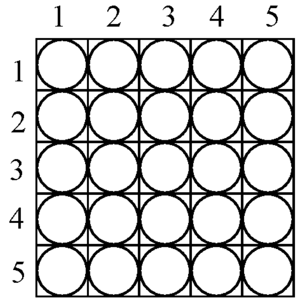


FIG. 4a

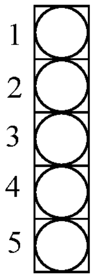


FIG. 4b

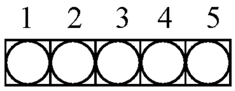


FIG. 4c

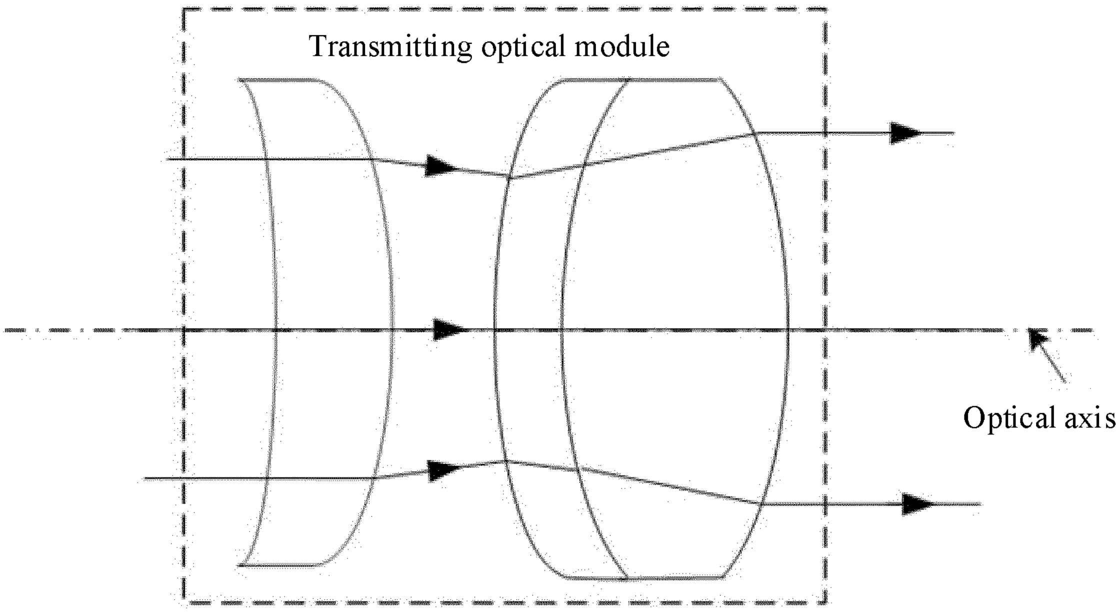


FIG. 5

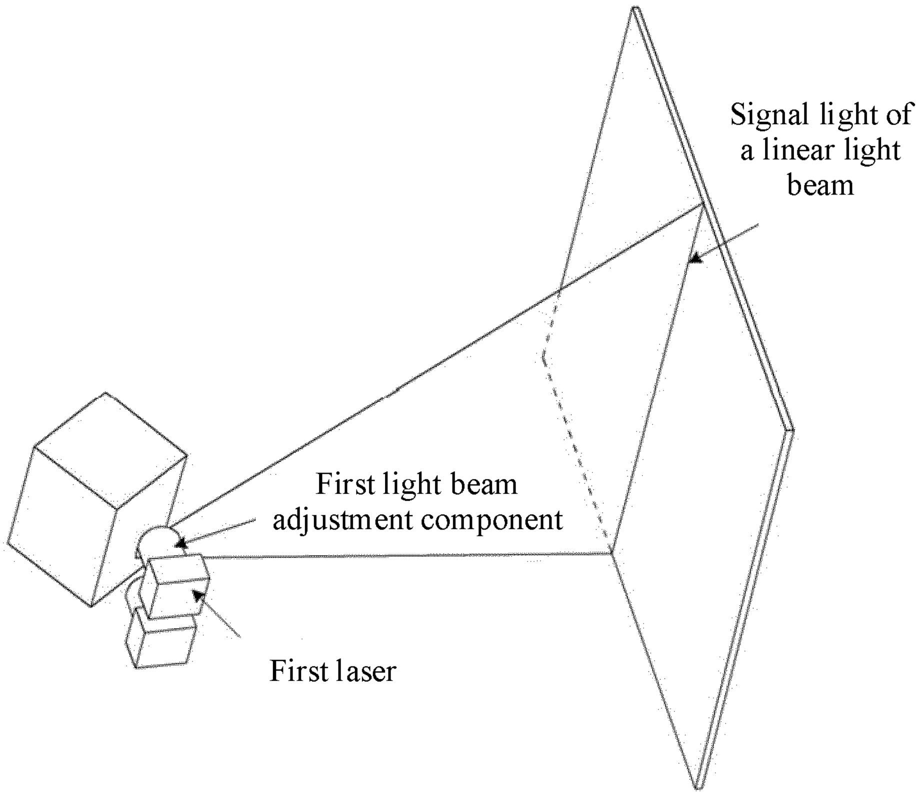
Signal light of a linear light beam
First light beam adjustment component
First laser

FIG. 6a

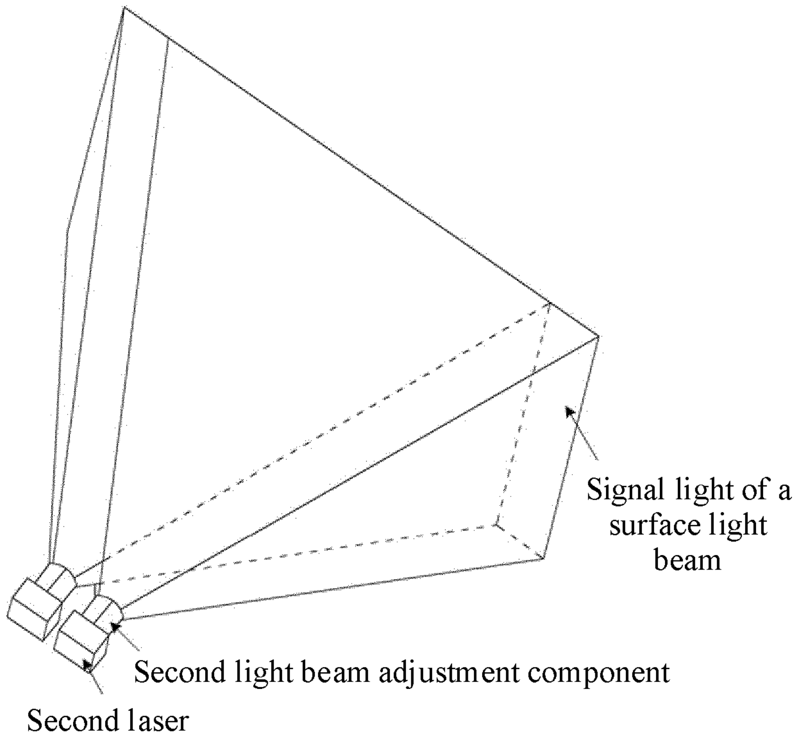
Signal light of a surface light beam
Second light beam adjustment component
Second laser

FIG. 6b

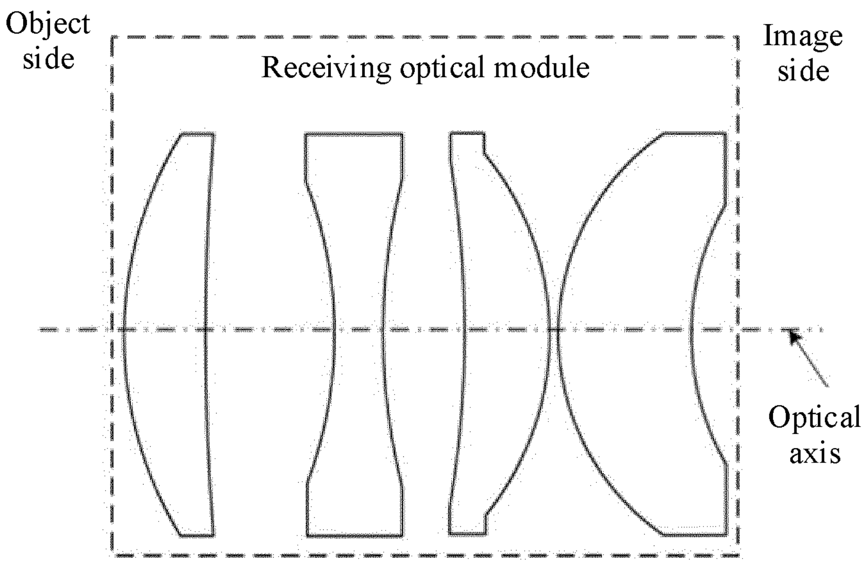
Object side
Receiving optical module
Image side
Optical axis

FIG. 7

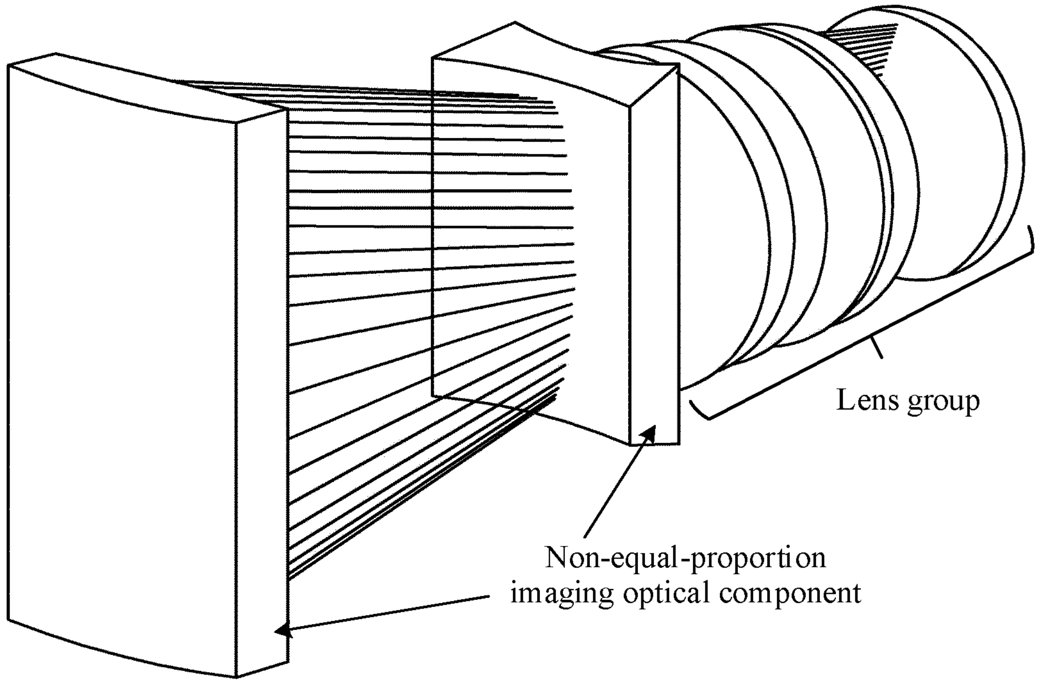
Lens group
Non-equal-proportion imaging optical component

FIG. 8

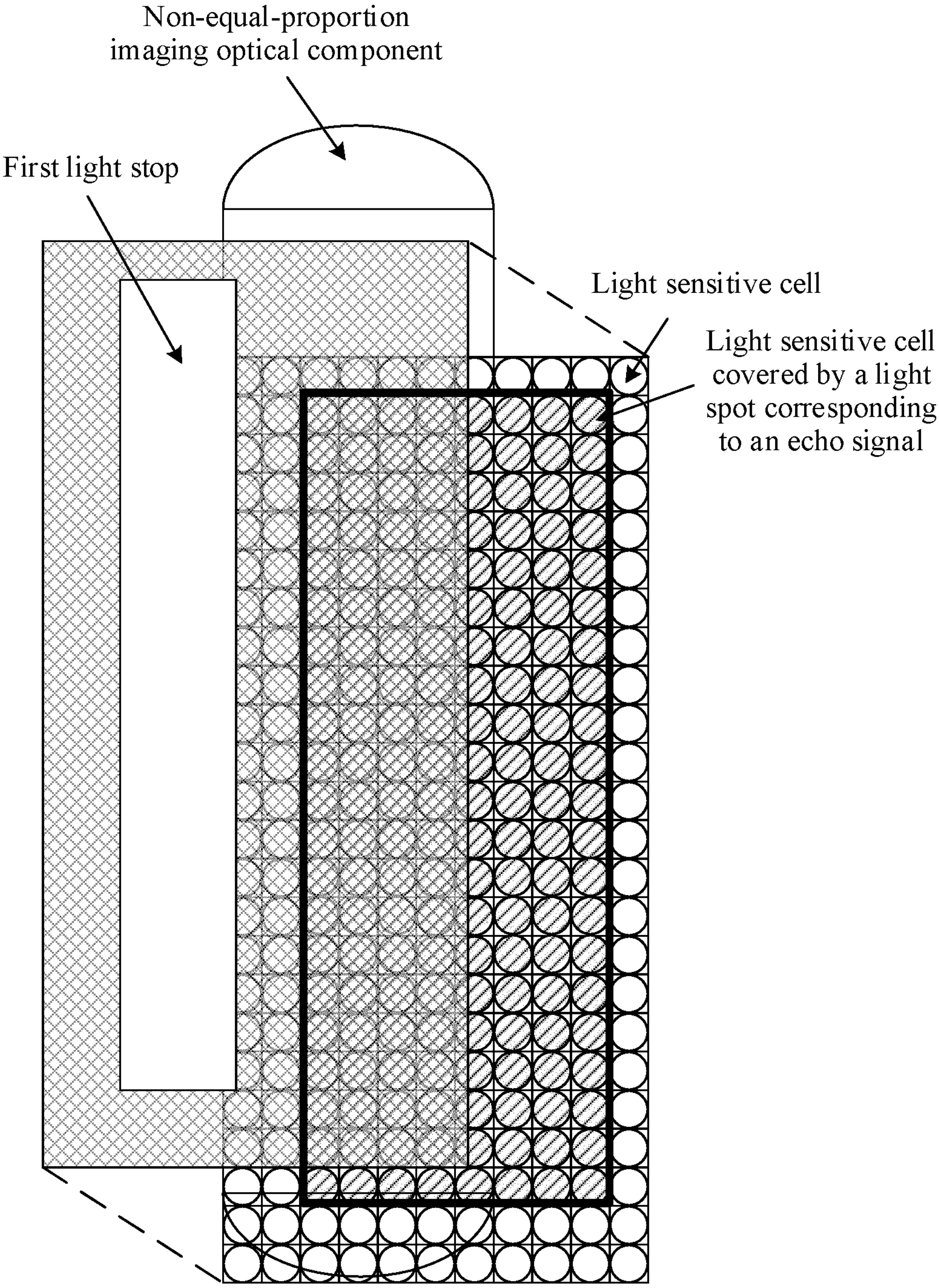
Non-equal-proportion imaging optical component
First light stop
Light sensitive cell
Light sensitive cell covered by a light spot corresponding to an echo signal

FIG. 9a

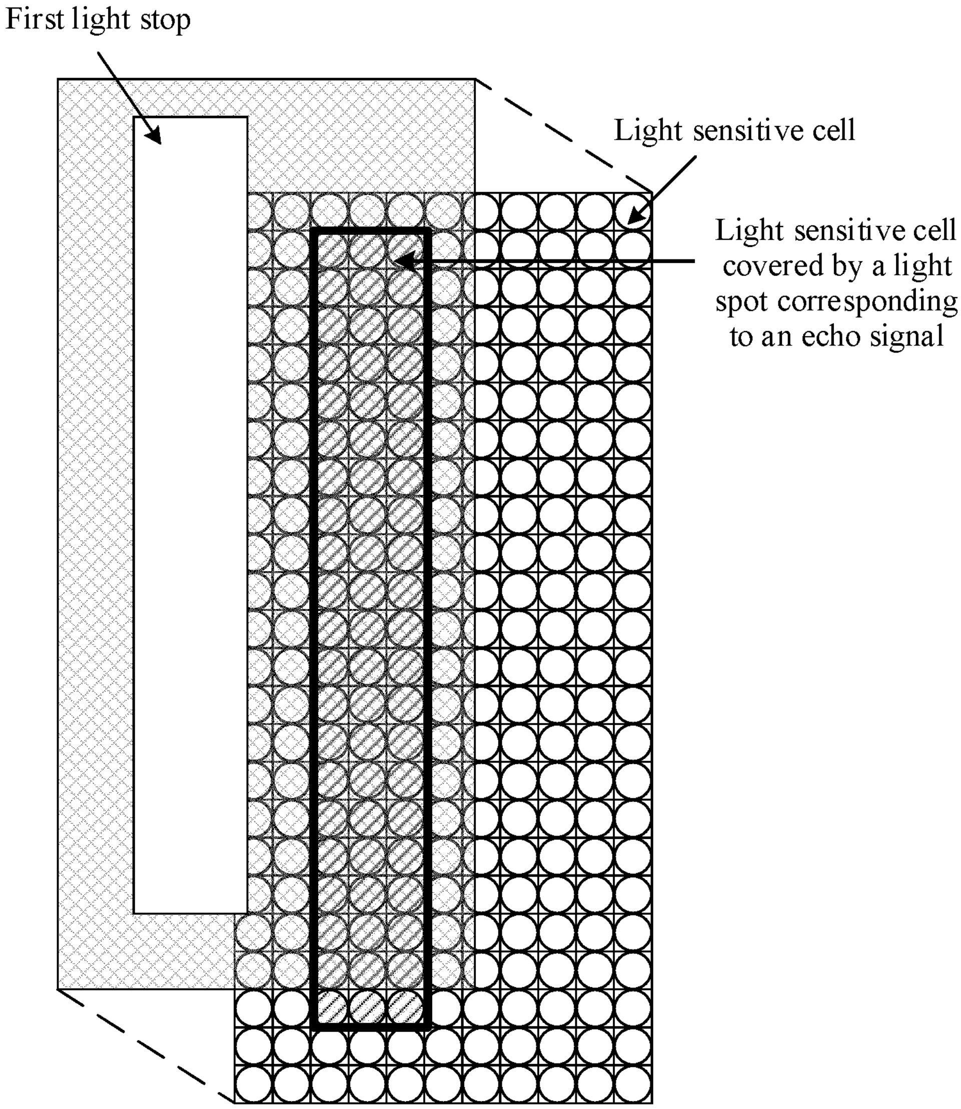
First light stop
Light sensitive cell
Light sensitive cell covered by a light spot corresponding to an echo signal

FIG. 9b

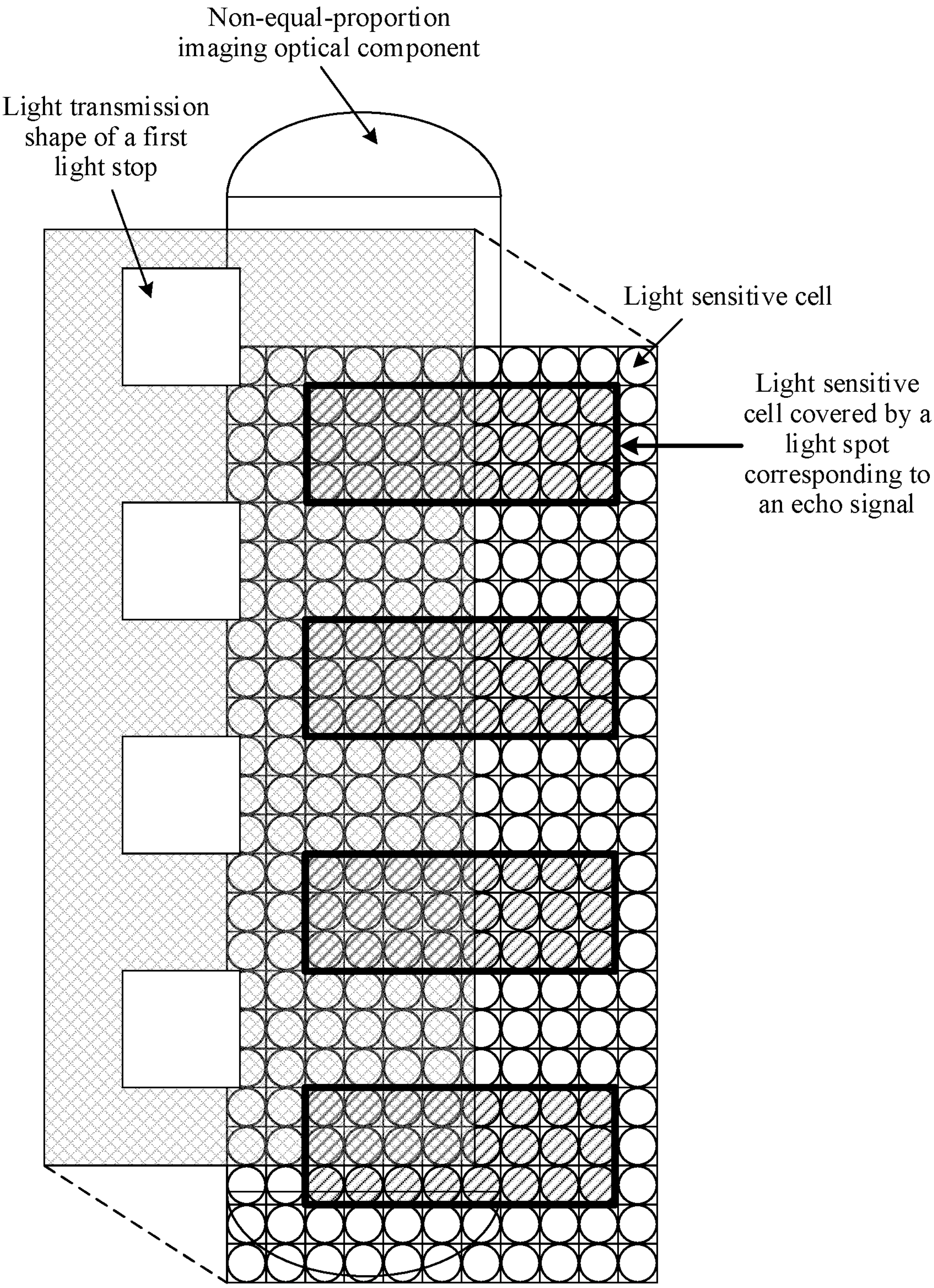
Non-equal-proportion imaging optical component
Light transmission shape of a first light stop
Light sensitive cell
Light sensitive cell covered by a light spot corresponding to an echo signal

FIG. 9c

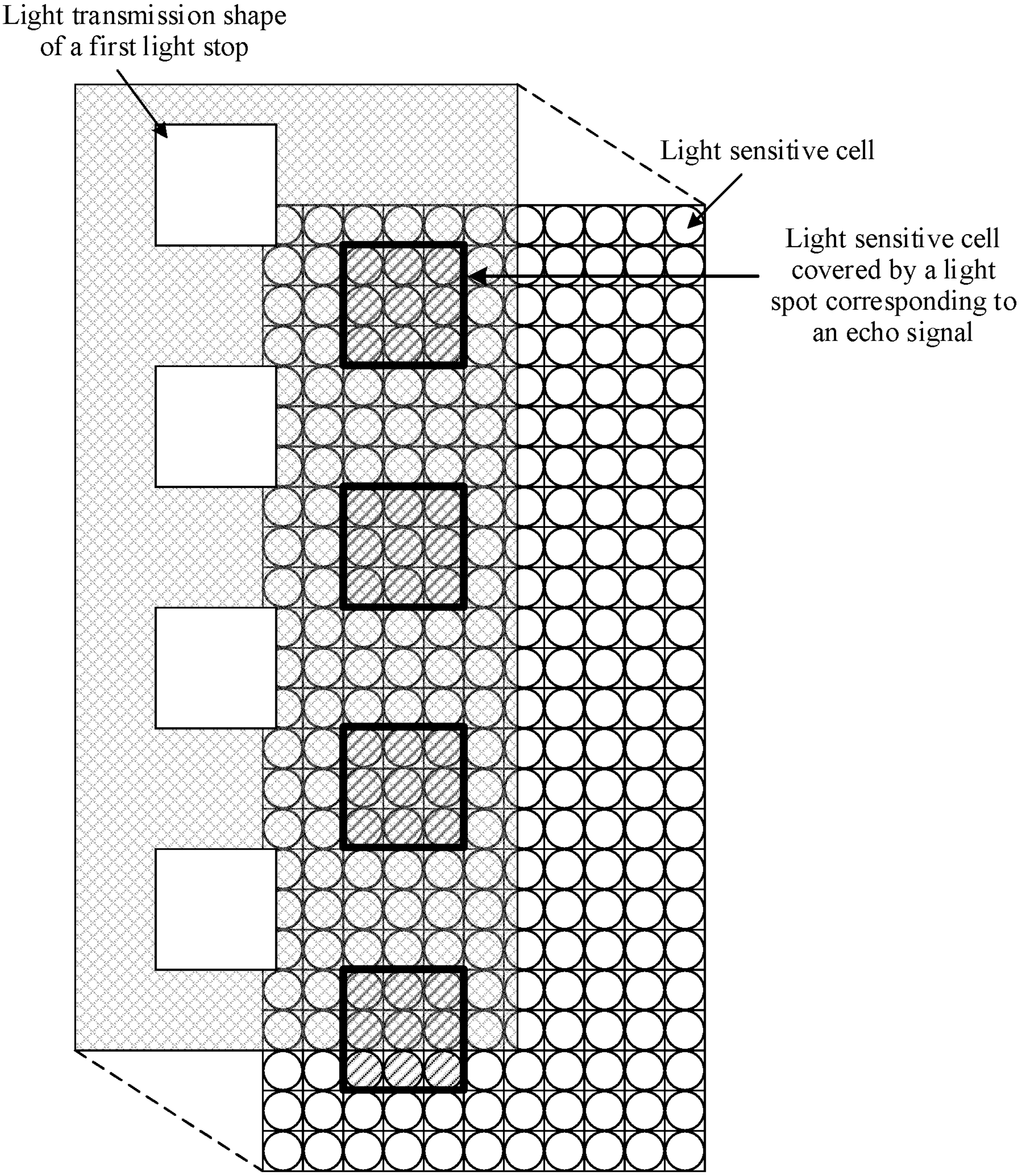
Light transmission shape of a first light stop
Light sensitive cell
Light sensitive cell covered by a light spot corresponding to an echo signal

FIG. 9d

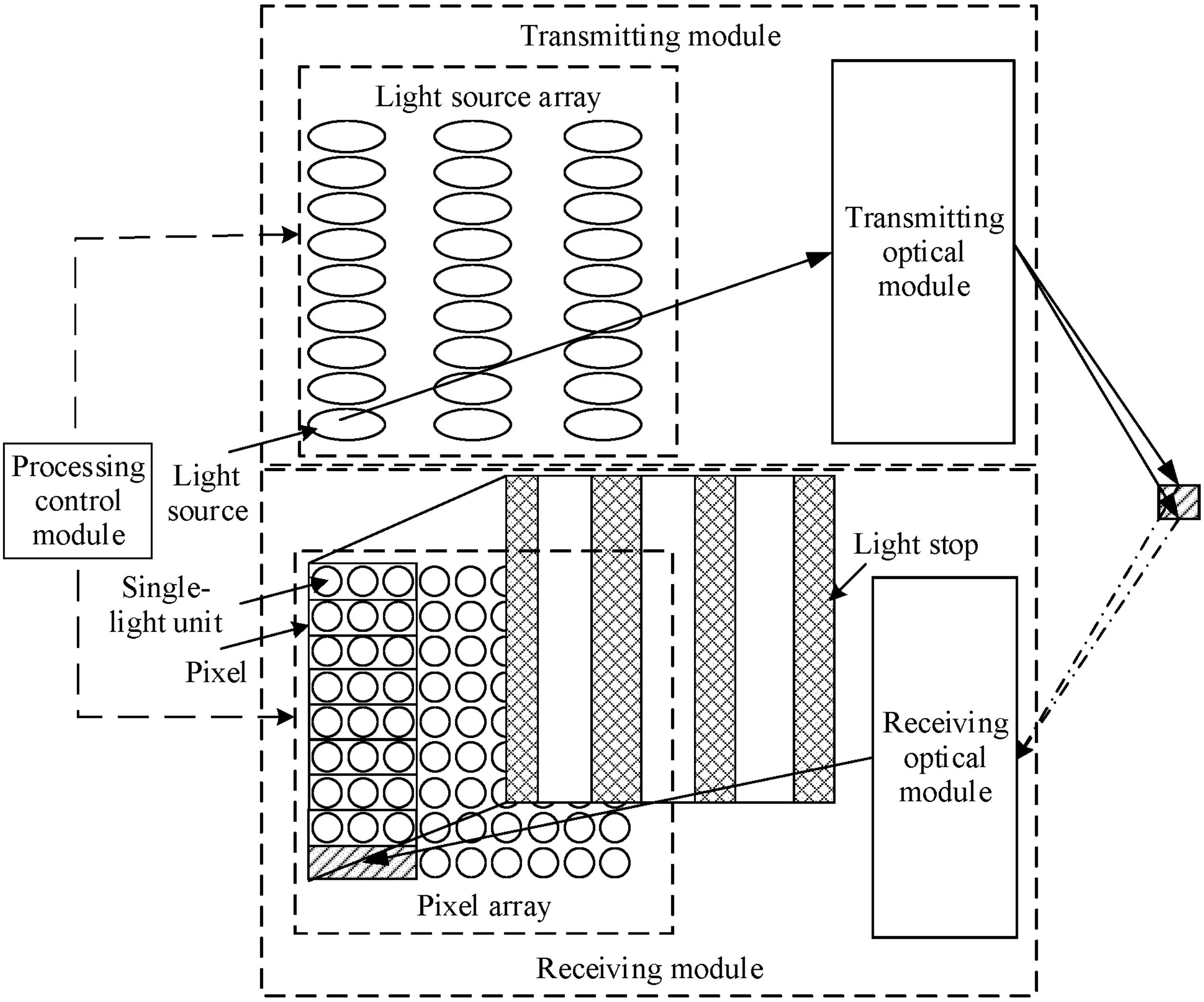
Transmitting module
Light source array
Transmitting optical module
Processing control module
Light source
Light stop
Single-light unit
Pixel
Receiving optical module
Pixel array
Receiving module

FIG. 10

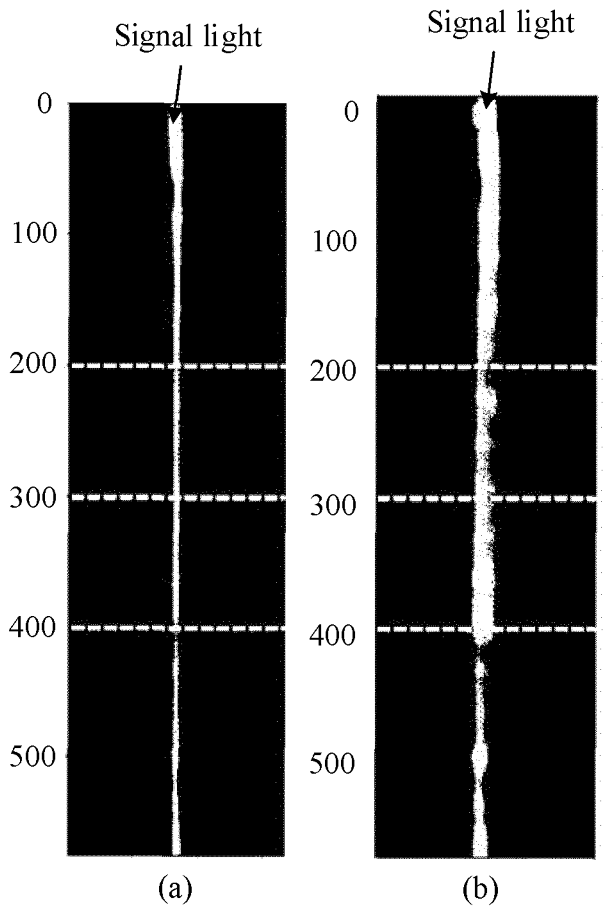
Signal light
0
100
200
300
400
500
(a)
Signal light
0
100
200
300
400
500
(b)

FIG. 11

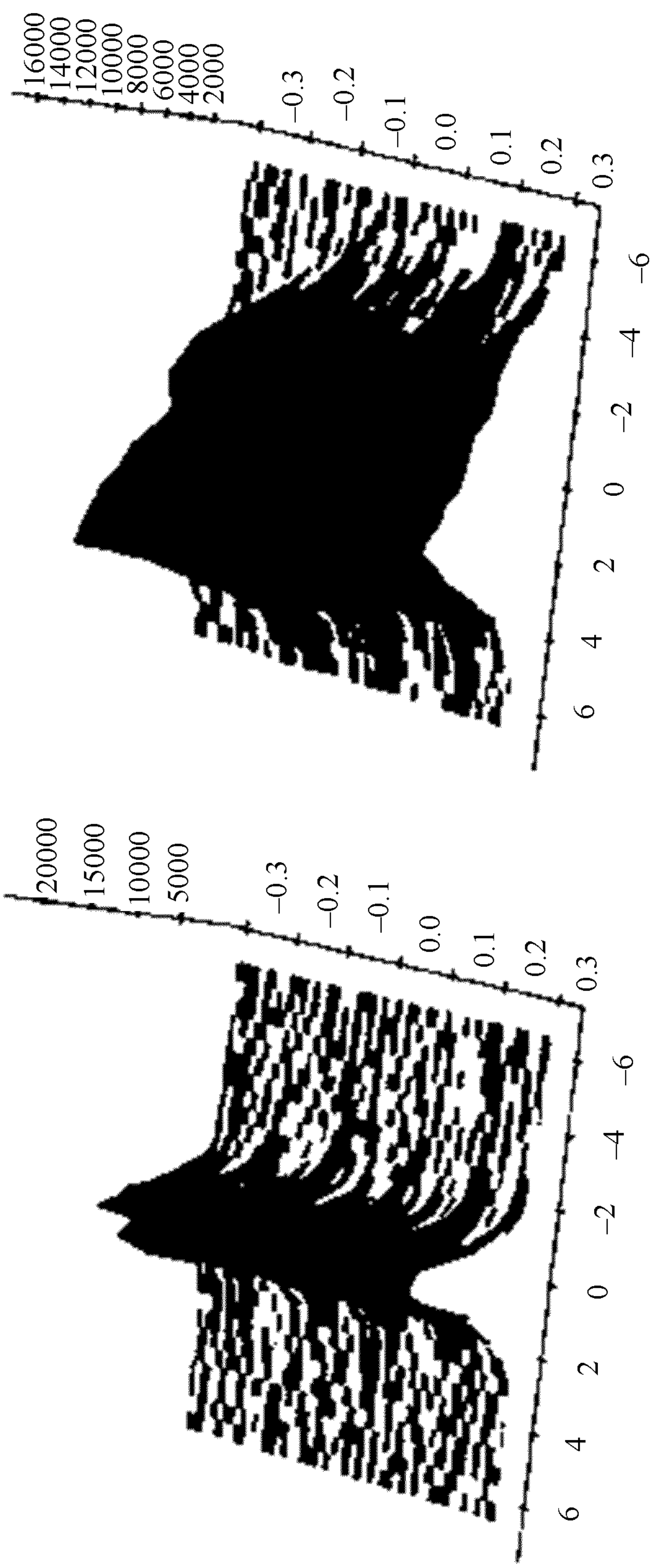


(a) Equal-proportion imaging

(b) Non-equal-proportion imaging

FIG. 12

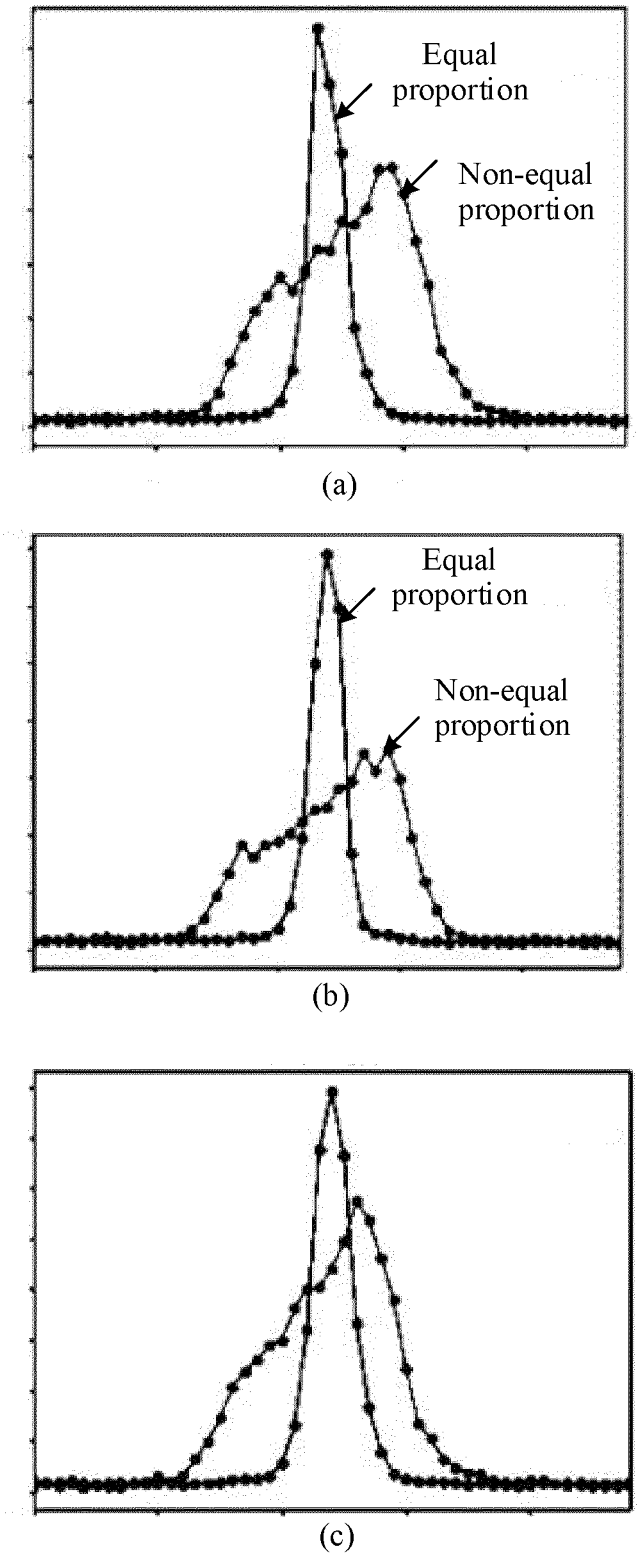
Equal
proportion
Non-equal
proportion
(a)
Equal
proportion
Non-equal
proportion
(b)
(c)

FIG. 13

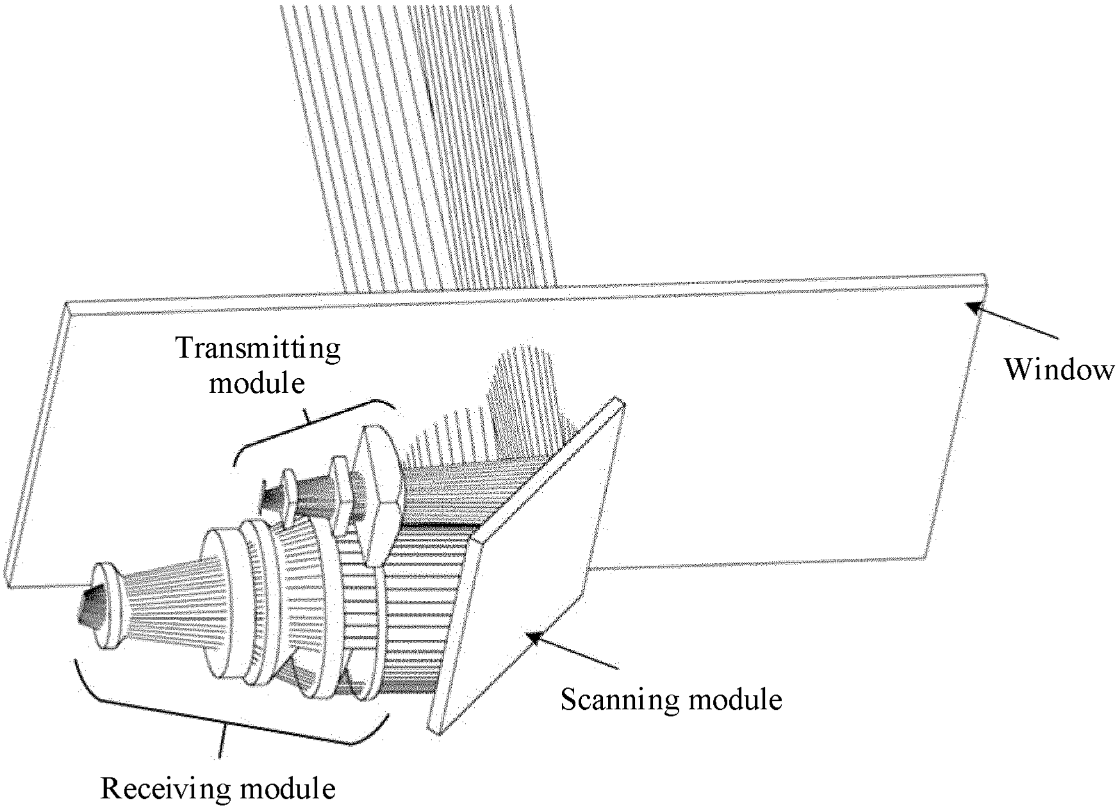
Transmitting module
Window
Scanning module
Receiving module

FIG. 14a

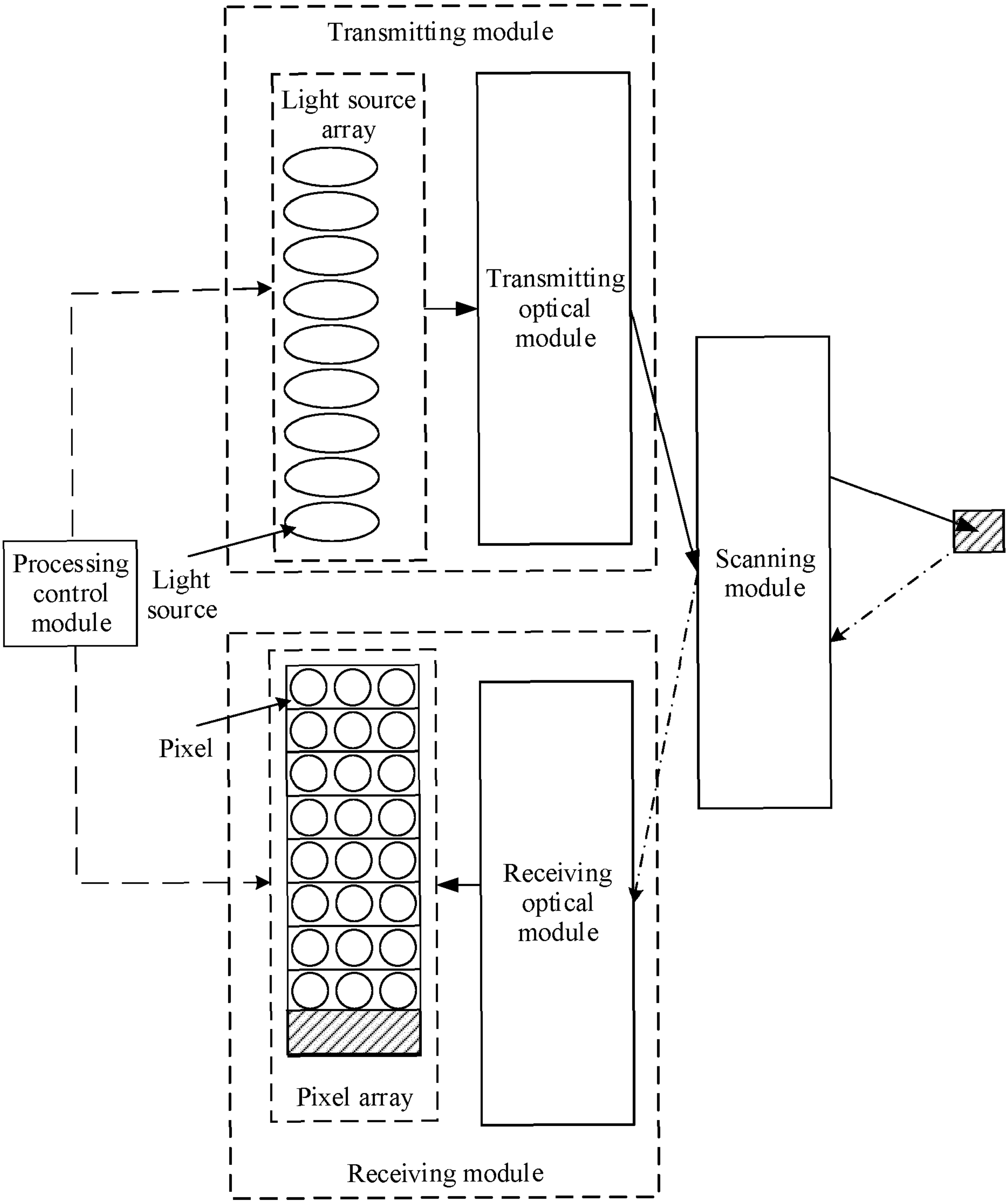
Transmitting module
Light source array
Transmitting optical module
Processing control module
Light source
Scanning module
Pixel
Receiving optical module
Pixel array
Receiving module

FIG. 14b

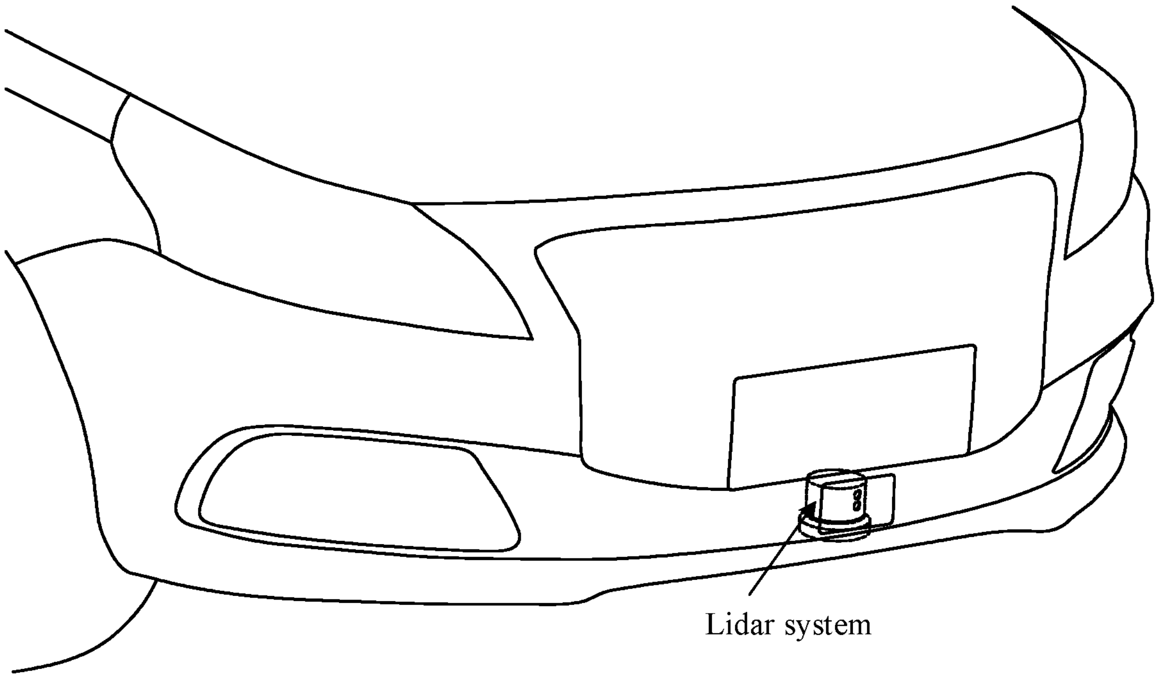
Lidar system

FIG. 15

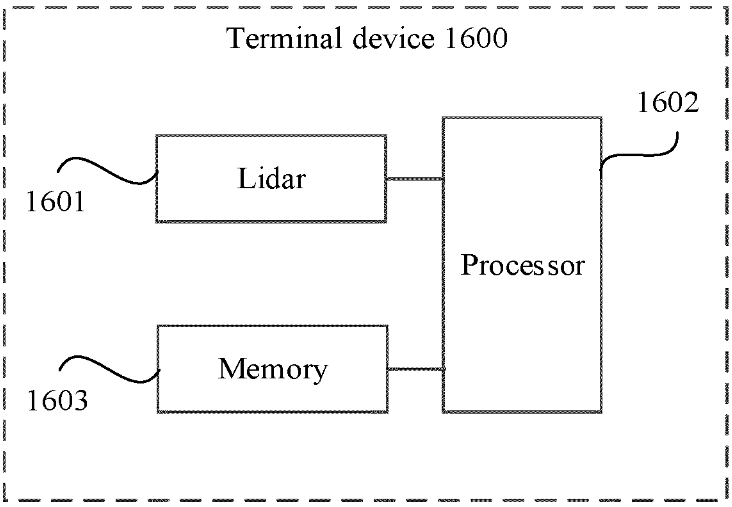
Terminal device 1600
1602
1601
Lidar
Processor
1603
Memory

FIG. 16

## INTERNATIONAL SEARCH REPORT

International application No.
**PCT/CN2021/112523**

**A. CLASSIFICATION OF SUBJECT MATTER**

G01S 17/08(2006.01)i; G01S 7/48(2006.01)i

According to International Patent Classification (IPC) or to both national classification and IPC

**B. FIELDS SEARCHED**

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNABS; CNTXT; CNKI; 万方, WANFANG; 超星, CHAOXING; VEN; USTXT; EPTXT; WOTXT; IEEE: 华为, 汪帅, 郭琦, 安凯, 余安亮, 合并, 像素, 感光, 光敏, 单元, 水平, 垂直, 分离, 弥散, 扩宽, 扩展, 扩散, 非等比, 不等比, 光斑, 会聚, 聚焦, 选通, lidar, laser radar, diffus+, extend+, focus+, cylindrical mirror?, bin+, pixel, detect+, sens+, scan+

**C. DOCUMENTS CONSIDERED TO BE RELEVANT**

| Category* | Citation of document, with indication, where appropriate, of the relevant passages | Relevant to claim No. |
|---|---|---|
| X | WO 2021016801 A1 (SUTENG INNOVATION TECHNOLOGY CO., LTD.) 04 February 2021 (2021-02-04) description, pages 1-8 | 1-16 |
| A | US 2020088850 A1 (ELECTRONICS AND TELECOMMUNICATIONS RESEARCH INSTITUTE) 19 March 2020 (2020-03-19) entire document | 1-16 |
| A | CN 102510450 A (BEIJING RUILAN UNITED COMMUNICATION TECHNOLOGY CO., LTD.) 20 June 2012 (2012-06-20) entire document | 1-16 |
| A | CN 112997095 A (SUTENG INNOVATION TECHNOLOGY CO., LTD.) 18 June 2021 (2021-06-18) entire document | 1-16 |
| A | CN 107219532 A (XI'AN ZHISENSOR TECHNOLOGY CO., LTD.) 29 September 2017 (2017-09-29) entire document | 1-16 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 April 2022** | **27 April 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

**INTERNATIONAL SEARCH REPORT**
**Information on patent family members**

International application No.
**PCT/CN2021/112523**

| Patent document cited in search report | | | Publication date (day/month/year) | Patent family member(s) | | | Publication date (day/month/year) |
|---|---|---|---|---|---|---|---|
| WO | 2021016801 | A1 | 04 February 2021 | CN | 112585488 | A | 30 March 2021 |
| US | 2020088850 | A1 | 19 March 2020 | KR | 20200033068 | A | 27 March 2020 |
| CN | 102510450 | A | 20 June 2012 | | None | | |
| CN | 112997095 | A | 18 June 2021 | WO | 2021196191 | A1 | 07 October 2021 |
| CN | 107219532 | A | 29 September 2017 | CN | 107219532 | B | 21 May 2019 |

Form PCT/ISA/210 (patent family annex) (January 2015)